(19) Europäisches Patentamt
European Patent Office
Office européen des brevets

(11) **EP 3 235 607 A1**

(12) **EUROPÄISCHE PATENTANMELDUNG**

(43) Veröffentlichungstag:
**25.10.2017 Patentblatt 2017/43**

(21) Anmeldenummer: **16166095.6**

(22) Anmeldetag: **19.04.2016**

(51) Int Cl.:
*B25J 15/04* (2006.01)      *B25J 15/10* (2006.01)
*H01R 13/631* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Deutsches Zentrum für Luft- und Raumfahrt e.V.**
**51147 Köln (DE)**

(72) Erfinder:
• **Vordermayer, Bernhard**
  **82110 Germering (DE)**
• **Gmeiner, Heinrich**
  **80333 München (DE)**
• **Wedler, Armin**
  **80636 München (DE)**
• **Takei, Yuto**
  **81245 München (DE)**

(74) Vertreter: **Ege Lee & Partner**
**Patentanwälte PartGmbB**
**Walter-Gropius-Straße 15**
**80807 München (DE)**

(54) **STECKVERBINDERANORDNUNG, VERFAHREN ZUM AUTOMATISIERTEN VERBINDEN EINER STECKVERBINDERANORDNUNG UND VERFAHREN ZUM AUTOMATISIERTEN LÖSEN EINER STECKVERBINDERANORDNUNG**

(57)     Verfahren zum automatisierten Verbinden einer Steckverbinderanordnung (100), die Steckverbinderanordnung (100) aufweisend ein erstes Steckverbindermodul (102) und ein zweites Steckverbindermodul (104), wobei das Verfahren folgende Schritte aufweist: Einfangen; Vorverbinden; Heranziehen; Endverbinden; Verriegeln, Verfahren zum automatisierten Lösen einer Steckverbinderanordnung (100), die Steckverbinderanordnung (100) aufweisend ein erstes Steckverbindermodul (102) und ein zweites Steckverbindermodul (104), wobei das erste Steckverbindermodul (102) und das zweite Steckverbindermodul (104) zunächst miteinander mithilfe einer Vorverbindung und einer verriegelten Endverbindung zur Signal-, Energie- und/oder Stoffübertragung verbunden sind und das Verfahren folgende Schritte aufweist: Beenden einer Signal-, Energie- und/oder Stoffübertragung zwischen dem ersten Steckverbindermodul (102) und dem zweiten Steckverbindermodul (104); Trennen des ersten Steckverbindermoduls (102) und des zweiten Steckverbindermoduls (104) voneinander und Steckverbinderanordnung (100) mit einem ersten Steckverbindermodul (102) und einem zweiten Steckverbindermodul (104), wobei die Steckverbinderanordnung (100) zum Durchführen derartiger Verfahren geeignet ist.

Fig. 1

EP 3 235 607 A1

**Beschreibung**

Die Erfindung betrifft eine Steckverbinderanordnung mit einem ersten Steckverbindermodul und einem zweiten Steckverbindermodul, wobei das zweite Steckverbindermodul wenigstens einen Koppelabschnitt mit einer Greifgegenkontur und einen Steckverbinderabschnitt zur Signal-, Energie- und/oder Stoffübertragung aufweist. Außerdem betrifft die Erfindung ein Verfahren zum automatisierten Verbinden einer derartigen Steckverbinderanordnung. Außerdem betrifft die Erfindung ein Verfahren zum automatisierten Lösen einer derartigen Steckverbinderanordnung.

Aus der US 5,320,395 A ist ein mikrokonischer Verbindungsstutzen bekannt zur Verwendung mit einem Verbindungsgreifmittel mit einer Mehrzahl von Klinken aufweisend: einen achssymmetrischen Körper, besagter Körper aufweisend ein Basisteil mit einer Drehmomentstützfläche um ein Drehen des besagten Verbindungsmittels zu verhindern, einen nach innen gewölbten Zwischenschließabschnitt, der eine Kavität aufweist, um die Klinken des besagten Mittels aufzunehmen und einen oberen Führungsabschnitt, der die Klinken über besagten oberen Führungsabschnitt führt und der in einer zur Achse des besagten Körpers im Wesentlichen senkrechten Fläche endet, gegen den die Klinken gesperrt sind, wobei besagte Drehmomentstützfläche endseitig an dem besagten Basisteil gegenüberliegend besagtem nach innen gewölbten Zwischenschließabschnitt angeordnet ist.

Aus der WO 97/26118 A1 ist ein Roboterwerkzeug-Wechselsystem bekannt zur Erleichterung des automatischen Wechsels von Werkzeugen an einem Ende eines Roboterarms mit: einer Roboter-Adaptereinrichtung zum Anbringen am Ende des Roboterarms; einer Werkzeug-Adaptereinrichtung zum Anbringen an einem Werkzeug; einem Einrastmechanismus zur automatischen Verbindung der Werkzeug- Adaptereinrichtung mit der Roboter-Adaptereinrichtung; und Schnittstellenpaare zur Übertragung von Dienstprogrammen über die miteinander verbundenen Roboter-Adaptereinrichtung und Werkzeug-Adaptereinrichtung auf das Werkzeug; gekennzeichnet durch ein der Roboter-Adaptereinrichtung zugeordnetes erstes, einen Durchgang bildendes Element, wobei dieses erste, einen Durchgang bildende Element an seinem ersten Ende eine Eingangsöffnung und an seinem zweiten Ende eine Ausgangsöffnung aufweist; ein der Werkzeug-Adaptereinrichtung zugeordnetes zweites, einen Durchgang bildendes Element, wobei dieses zweite, einen Durchgang bildende Element an seinem ersten Ende eine Eingangsöffnung und an seinem zweiten Ende eine Ausgangsöffnung aufweist; ein erstes Zubringerrohr zur Beförderung von Befestigungselementen von einem Sammelbehälter für Befestigungselemente zur Eingangsöffnung des ersten, einen Durchgang bildenden Elements; ein zweites Zubringerrohr zur Beförderung von Befestigungselementen von der Ausgangsöffnung des zweiten, einen Durchgang bildenden Elements zum Werkzeug für das Anheften der Befestigungselemente; und in welchem die automatische Verbindung der Werkzeug-Adaptereinrichtung mit der Roboter-Adaptereinrichtung dafür sorgt, dass das erste und zweite, einen Durchgang bildende Element miteinander in Eingriff kommen und einen Durchgangskanal bilden, welcher von der Eingangsöffnung des ersten, einen Durchgang bildenden Elements bis zur Ausgangsöffnung des zweiten, einen Durchgang bildenden Elements reicht, sodass ein Befestigungselement vom Sammelbehälter für Befestigungselemente durch das erste Zubringerrohr, den Durchgangskanal und das zweite Zubringerrohr bis zum Werkzeug befördert wird.

Aus der WO 2009/059440 A1 ist ein buchsenseitiger Stecker oder stiftseitiger Stecker bekannt, insbesondere für ein Werkzeugwechselsystem zur elektrischen Verbindung eines Werkzeuges mit einer Roboterhand, umfassend ein Steckergehäuse zur Befestigung an einem Roboterarm oder an einem Werkzeug, wobei das Steckergehäuse mindestens eine Kontaktkammer und mindestens eine Aufnahmekammer umfasst, welche im Wesentlichen über der Kontaktkammer angeordnet ist, und wobei in der mindestens einen Kontaktkammer ein Anschlussmodul mit elektrisch leitenden Elementen zur Verbindung an wenigstens eine erste periphere Vorrichtung, insbesondere ein Kabel, und in der mindestens einen Aufnahmekammer ein Verschleißmodul mit elektrisch leitenden Elementen zur Verbindung mit einer zweiten peripheren Vorrichtung, insbesondere ein komplementärer Stecker, anordbar ist, wobei die elektrisch leitenden Elemente des Anschlussmoduls mit den elektrisch leitenden Elementen des Verschleißmoduls verbindbar sind.

Aus der US 6,842,666 B2 ist ein Robotersystem bekannt in dem verschiedenartige Teile von Informationen ausgetauscht werden zwischen einem Werkzeug an einem Handgelenk eines Roboters und einem Bedienfeld durch drahtlose Kommunikation, aufweisend: mehrere Speicherzellen, um das Werkzeug mit Leistung zu versorgen beinhaltend Informationskommunikation; mehrere Ladegeräte, um die mehreren Speicherzellen zu laden; einen automatischen Schaltermechanismus vorgesehen an jeder der mehreren Speicherzellen, der eine zugehörige Speicherzelle von dem Werkzeug zu einem der Ladegeräte und umgekehrt überführt; und worin, wenn eine erste der Speicherzellen, die an dem Werkzeug angeordnet ist, leer wird, die erste Speicherzelle zu einem ersten verfügbaren Ladegerät der mehreren Ladegeräte zurückgeführt wird, um geladen zu werden und eine zweite der Speicherzellen, die an einem zweiten Ladegerät der mehreren Ladegeräte geladen worden ist, an dem Werkzeug aufgenommen wird.

Aus der US 4,929,011 A ist eine Greifvorrichtung bekannt, aufweisend eine Basis mit einem Montageflansch mit einem sich nach außen erstreckenden zylindrischen Körper mit einer äußeren, ringförmigen Endeffektor-Widerlager-Fläche, einen an dem zylindrischen Körper angebrachten und sich von dem zylindrischen Körper radial in eine seitliche Richtung erstreckenden Endeffektor-Rast-Zapfen, einen im Wesentlichen kegelförmigen, die Greifvorrichtung ausrichtenden Körper, der sich von dem zylindrischen Körper nach außen erstreckt, wobei der kegelförmige Körper an der Widerlager-Fläche angebracht einen zylindrischen, den Endeffektor festlegenden Basisabschnitt aufweist, und eine sich seitlich erstreckende, in eine Ausnehmung der Greifvorrichtung eingreifende, gerundete Schulter, die sich um einen Abschnitt der zylindrischen Basis herum erstreckt und gegen eine Bewegung relativ zu der Widerlager-Fläche gesichert ist.

Der Erfindung liegt die Aufgabe zugrunde, eine eingangs genannte Steckverbinderanordnung baulich und/oder funktional zu verbessern. Außerdem liegt der Erfindung die Aufgabe zugrunde eingangs genannte Verfahren zu verbessern. Insbesondere soll ein Verfahren bereitgestellt werden, das in rauen Umgebungen, insbesondere im Weltraum und/oder in der Tiefsee, durchführbar ist. Insbesondere sollen ein Verbindungsvorgang und/oder ein Lösevorgang aktiv unterstützt werden. Insbesondere soll eine Toleranz erhöht werden. Insbesondere soll eine Sicherheit erhöht werden. Insbesondere soll eine Eignung zur Standardisierbarkeit erhöht werden. Insbesondere soll ein Ausfallrisiko reduziert werden. Insbesondere soll ein Aufwand, wie Kostenaufwand und/oder technischer Aufwand, reduziert werden. Insbesondere soll eine Kompatibilität erhöht werden. Insbesondere sollen externe Komponenten entfallen oder vereinfacht werden können. Insbesondere soll ein Verfahren bereitgestellt werden, das variabel einsetzbar ist.

Die Aufgabe wird gelöst mit einer Steckverbinderanordnung mit einem ersten Steckverbindermodul und einem zweiten Steckverbindermodul, wobei das zweite Steckverbindermodul wenigstens einen Koppelabschnitt mit einer Greifgegenkontur und einen Steckverbinderabschnitt zur Signal-, Energie- und/oder Stoffübertragung aufweist, wobei der wenigstens eine Koppelabschnitt und der Steckverbinderabschnitt des zweiten Steckverbindermoduls relativ zueinander drehbar sind.

Eine Drehbewegung kann messbar sein. Zum Messen einer Drehbewegung können ein Encoder, ein Resolver oder GMR-Sensoren mit Encoderfunktionalität vorgesehen sein.

Das erste Steckverbindermodul kann ein aktives Steckverbindermodul sein. Das erste Steckverbindermodul kann dazu dienen, einen aktiven Teil eines Verbindungs- und/oder Trennvorgangs, insbesondere ein Einfangen und ein Heranziehen, zu übernehmen. Das erste Steckverbindermodul kann eine bewegbare Greifeinrichtung aufweisen. Das zweite Steckverbindermodul kann ein passives Steckverbindermodul sein. Das zweite Steckverbindermodul kann dazu dienen, von dem ersten Steckverbindermodul insbesondere eingefangen und herangezogen zu werden. Eine Fangzone kann dem ersten Steckverbindermodul zugeordnet sein. Die Fangzone kann eine Zone sein, in der die Greifeinrichtung greifen kann.

Die Steckverbinderanordnung kann zwei erste Steckverbindermodule und ein zweites Steckverbindermodul aufweisen. Das zweite Steckverbindermodul kann dazu dienen, zwei erste Steckverbindermodule miteinander zu verbinden. Das zweite Steckverbindermodul kann zwei Koppelabschnitte aufweisen.

Die Greifeinrichtung kann wenigstens einen Greifabschnitt mit einer Greifkontur aufweisen. Die Greifeinrichtung kann wenigstens einen Sensor aufweisen. Die Greifeinrichtung kann wenigstens einen elektrischen Kontaktabschnitt aufweisen. Der wenigstens eine elektrische Kontaktabschnitt kann zur elektrischen Kontaktierung eines zweiten Steckverbindermoduls dienen.

Die Greifeinrichtung kann mehrere Greifarme aufweisen. Die Greifarme können jeweils mehrere Gelenke aufweisen. Die Greifeinrichtung kann eine Antriebseinrichtung zum Bewegen der Greifarme aufweisen. Die Greifarme können jeweils ein freies Ende und ein Anschlussende aufweisen. Die Greifarme können jeweils wenigstens zwei rotatorische Gelenke aufweisen. Die Greifarme können jeweils ein an dem Anschlussende angeordnetes Anschlussgelenk und wenigstens ein zwischen dem Anschlussende und dem freien Ende angeordnetes Zwischengelenk aufweisen. Die Gelenke können rotatorische Gelenke sein. Die Anschlussgelenke können jeweils um zwei Achsen drehbar sein. Die Greifarme können jeweils wenigstens zwei Freiheitsgrade aufweisen. Die Greifarme können jeweils drei Freiheitsgrade aufweisen.

Gleichsinnige Freiheitsgrade der Greifarme können jeweils mithilfe eines gemeinsamen Antriebs bewegbar sein. Die Antriebseinrichtung kann wenigstens zwei Antriebe aufweisen. Die wenigstens zwei Antriebe können jeweils zum Bewegen aller Greifarme dienen. Die Antriebseinrichtung kann eine hydraulische, pneumatische und/oder elektromotorische Antriebseinrichtung sein. An den Greifarmen können jeweils Sensoren angeordnet sein. Die Sensoren können jeweils an einem Gelenk angeordnet sein. Die Sensoren können dazu dienen, eine Kraft und/oder ein Drehmoment zu erfassen. Signale der Sensoren können beim Kontrollieren der Antriebseinrichtung berücksichtigt werden. Damit kann eine Positions- und/oder Kraftregelung erfolgen. Komplexe Bewegungsmuster zum Ausgleich von Versatz und/oder Lage können kommandiert werden.

Die Greifarme können jeweils an ihren freien Enden einen Greifabschnitt aufweisen. Die Greifabschnitte können jeweils definiert konturiert sein. Die Greifabschnitte können jeweils eine Kontur aufweisen, die zu einer korrespondierenden Kontur an einem Koppelabschnitt eines zweiten Steckverbindermoduls geometrisch komplementär konturiert ist. Die Greifabschnitte können jeweils eine hakenartige Kontur aufweisen. Die Greifabschnitte können jeweils eine nutartige Kontur aufweisen. Die Greifabschnitte können jeweils zumindest abschnittsweise eine Oberfläche mit einem hohen Reibungskoeffizienten bezogen auf einen Koppelabschnitt eines zweiten Steckverbindermoduls aufweisen. Die Greifabschnitte können jeweils zumindest abschnittsweise eine metallische Oberfläche aufweisen. Die Greifabschnitte können jeweils zumindest abschnittsweise eine Oberfläche aus einem Elastomer aufweisen.

Die freien Enden der Greifarme können mithilfe eines Rings miteinander verbunden sein. An dem Ring können Greifelemente angeordnet sein. Die Greifelemente können an dem Ring verlagerbar angeordnet sein. Die Greifelemente können irismechanikartig ausgeführt sein. Die Greifelemente können als Seil- oder Strebeniris ausgeführt sein. Die Greifelemente können mit mechanischen radial verlagerbaren Backen ausgeführt sein. An dem Ring können mechanische und elektrische Komponenten angeordnet sein. An dem Ring können Sensoren angeordnet sein.

Die Greifeinrichtung kann einen in sich starren Gerüstabschnitt aufweisen. Der Gerüstabschnitt kann einen Ringabschnitt und Armabschnitte aufweisen. Die Armabschnitte können jeweils ein freies Ende und ein dem Ringabschnitt zugeordnetes Ende aufweisen. Die Greifeinrichtung kann Greifelemente aufweisen. Die Greifelemente können an dem Gerüstabschnitt angeordnet sein. Die Greifelemente können jeweils an einem Armabschnitt angeordnet sein. Die Greifelemente können jeweils an einem freien Enden eines Armabschnitts angeordnet sein. Die Greifelemente können jeweils verlagerbar sein. Die Greifeinrichtung kann eine Antriebseinrichtung zum Verlagern der Greifelemente aufweisen. Die Antriebseinrichtung kann eine hydraulische, pneumatische und/oder elektromotorische Antriebseinrichtung sein. Die Greifelemente können jeweils backenartig ausgeführt sein. Die Greifelemente können jeweils entlang einer vorgegebenen Bahn verlagerbar sein. Die Bahnen können jeweils eine axiale und eine radiale Richtungskomponente aufweisen. An den Greifelementen können jeweils Sensoren, wie Drucksensoren, angeordnet sein. Die Greifelemente können jeweils einzeln ansteuerbar sein.

Die Greifeinrichtung kann einen in sich starren Gerüstabschnitt aufweisen. Die Greifeinrichtung kann größenveränderbare Kissenelemente aufweisen. Die Kissenelemente können an dem Gerüstabschnitt angeordnet sein. Die Greifeinrichtung kann eine Betätigungseinrichtung zur Größenveränderung der Kissenelemente aufweisen. Die Kissenelemente können hydraulisch aufblasbar sein. Die Kissenelemente können jeweils aus einem membranartigen Werkstoff hergestellt sein. Die Kissenelemente können jeweils aus einem faserverstärkten Werkstoff hergestellt sein. Die Betätigungseinrichtung kann eine Pumpe aufweisen.

Die Greifeinrichtung kann ringförmig angeordnete Backen aufweisen. Die Backen können mithilfe von Seilzügen miteinander verbunden sein. Die Backen können auf Schienen gelagert sein. Die Schienen können radial angeordnet sein. Die Backen können entlang der Schienen konzentrisch oder exzentrisch verlagerbar sein. Die Greifeinrichtung kann eine Antriebseinrichtung zum Verlagern der Backen aufweisen. Die Antriebseinrichtung kann eine hydraulische, pneumatische und/oder elektromotorische Antriebseinrichtung sein. Die Antriebseinrichtung kann ein Getriebe und/oder einen Spindelantrieb aufweisen. Die Antriebseinrichtung kann eine Federeinrichtung aufweisen. Die Federeinrichtung kann bei einer Hinbewegung der Backen vorspannbar sein, um eine Rückbewegung zu ermöglichen. Die Greifeinrichtung kann antagonistisch wirkende Seilzüge aufweisen, um eine Hin- und Rückbewegung der Backen zu ermöglichen.

Die Greifeinrichtung kann eine Epi- oder Hypotrochoidmechanik aufweisen. Die Greifeinrichtung kann miteinander gekoppelte Zahnräder aufweisen, wobei einige der Zahnräder zu einem Bezugspunkt fest und andere dieser Zahnräder dazu beweglich gekoppelt sind.

Es können zwei erste Steckverbindermodule zum gegenseitigen Verbinden geeignet sein. Zum gegenseitigen Verbinden zweier erster Steckverbindermodule können die ersten Steckverbindermodule derart eingestellt werden, dass ihre Greifeinrichtungen nicht kollidieren.

Das erste Steckverbindermodul kann einen Steckverbinderabschnitt zur Signal-, Energie- und/oder Stoffübertragung aufweisen. Der Steckverbinderabschnitt kann gesonderte Abschnitte zur Signal-, Energie- und/oder Stoffübertragung aufweisen. Der Steckverbinderabschnitt kann zum Übertragen elektrischer Signale dienen. Der Steckverbinderabschnitt kann zum Übertragen hydraulisch transportierbarer Energie dienen. Der Steckverbinderabschnitt kann optische Leitungen aufweisen. Die optischen Leitungen können zum Übertragen von Video- und/oder Dateninformationen dienen. Der Steckverbinderabschnitt kann variabel belegbar sein. Der Steckverbinderabschnitt kann modular aufgebaut sein. Der Steckverbinderabschnitt kann wenigstens einen Kollimator aufweisen. Der Steckverbinderabschnitt kann eine Heizeinrichtung aufweisen. Die Heizeinrichtung kann wenigstens einen Sensor aufweisen. Der Steckverbinderabschnitt kann wenigstens eine elektrische Spule aufweisen. Der Steckverbinderabschnitt kann wenigstens einen Gleich- und/oder Wechselrichter aufweisen. Der Steckverbinderabschnitt kann ein Spulenpaket aufweisen. Das Spulenpaket kann segmentiert sein. Der Steckverbinderabschnitt kann Steckerstifte aufweisen. Die Steckerstifte können federkraftbeaufschlagt sein. Die Steckerstifte können ein- und/oder ausfahrbar sein. Der Steckverbinderabschnitt kann Steckerbuchsen aufweisen. Der Steckverbinderabschnitt kann axial kontaktierbar sein. Der Steckverbinderabschnitt kann radial kontaktierbar sein. Der Steckverbinderabschnitt kann einen Kontaktring aufweisen.

Der Steckverbinderabschnitt des ersten Steckverbindermoduls kann eine öffen- und schließbare Schutzeinrichtung aufweisen. Der Steckverbinderabschnitt des zweiten Steckverbindermoduls kann eine öffen- und schließbare Schutzeinrichtung aufweisen. Die Schutzeinrichtung kann irisartig ausgeführt sein. Die Schutzeinrichtung kann als Abdeckung ausgeführt sein. Die Schutzeinrichtung kann nach außen konvex gewölbt sein. Die Schutzeinrichtung kann mit einer hochfrequenten Spannung beaufschlagbar sein. Die Schutzeinrichtung kann veränderlich statisch aufladbar sein.

Das erste Steckverbindermodul kann einen Verbindungsabschnitt zur mechanischen Verbindung mit dem zweiten Steckverbindermodul aufweisen. Das zweite Steckverbindermodul kann einen Verbindungsabschnitt zur mechanischen Verbindung mit dem ersten Steckverbindermodul aufweisen. Die Verbindungsabschnitte können zueinander geometrisch komplementär ausgeführt sein. Die Verbindungsabschnitte können miteinander in einer Steck- /Drehbewegung verbindbar sein.

Der Koppelabschnitt kann haken- oder nutartig konturiert sein. Der wenigstens eine Koppelabschnitt kann wenigstens eine Sendeeinrichtung aufweisen. Der wenigstens eine Koppelabschnitt kann wenigstens einen elektrischen Kontaktabschnitt aufweisen.

Der Steckverbinderabschnitt des zweiten Steckverbindermoduls kann eine Federeinrichtung aufweisen. Die Federeinrichtung kann bei einem Verbinden der Steckverbindermodule vorspannbar sein.

Außerdem wird die der Erfindung zugrundeliegende Aufgabe gelöst mit einem Verfahren zum automatisierten Verbinden einer derartigen Steckverbinderanordnung, wobei das Verfahren folgende Schritte aufweist: Einfangen; Vorverbinden; Heranziehen; Endverbinden; Verriegeln.

Das Verfahren kann ausgehend von einer geöffneten Steckverbinderanordnung durchgeführt werden. Das Verbinden kann auch als Andocken bezeichnet werden. Unter "automatisiert" kann vorliegend auch ein teilautomatisiertes Verbinden verstanden werden. Das Verbinden kann ferngesteuert beeinflusst werden. Das Verbinden kann autonom erfolgen. Mithilfe der Schritte kann das Verbinden mehrfach unterteilt sein. Die Schritte können zum Verbinden in folgender Reihenfolge durchgeführt werden: Einfangen; Vorverbinden; Heranziehen; Endverbinden; Verriegeln.

Zum Einfangen kann eine Greifeinrichtung geöffnet werden. Zum Einfangen kann ein Koppelabschnitt freigegeben werden. Zum Einfangen kann eine öffen- und schließbare Schutzeinrichtung geöffnet werden. Zum Einfangen können das erste Steckverbindermodul und das zweite Steckverbindermodul zueinander axial und/oder radial vororientiert werden. Zum Einfangen können das erste Steckverbindermodul und das zweite Steckverbindermodul einander bis in eine Fangzone angenähert werden. Beispielsweise kann sich die Fangzone über einen Bereich von bis zu ca. 50cm ausgehend von einem Steckverbindermodul erstrecken. Wenn das erste Steckverbindermodul und das zweite Steckverbindermodul einander bis in eine Fangzone angenähert sind, können die Steckverbindermodule voneinander beispielsweise einen Abstand von unter ca. 50cm aufweisen. Zum Einfangen können Sensoren genutzt werden. Ein Einfangen kann ohne Nutzung von Sensoren erfolgen. Es kann eine Erfolgswahrscheinlichkeit für ein Vorverbinden berechnet werden. Ein Vorverbinden kann eingeleitet werden, wenn eine vorgegebene Mindesterfolgswahrscheinlichkeit erreicht ist.

Zum Vorverbinden können das erste Steckverbindermodul und das zweite Steckverbindermodul miteinander lediglich mechanisch verbunden werden. Zum Vorverbinden kann eine Greifeinrichtung eines Steckverbindermoduls über einem Koppelabschnitt des anderen Steckverbindermoduls angeordnet werden. Es kann verifiziert werden, dass das erste Steckverbindermodul und das zweite Steckverbindermodul einander bis in eine Fangzone angenähert sind. Dazu können Sensoren genutzt werden. Zum Vorverbinden kann eine Greifeinrichtung eines Steckverbindermoduls einen Koppelabschnitt des anderen Steckverbindermoduls greifen, sodass eine lediglich mechanische Verbindung hergestellt wird. Beim Vorverbinden kann ein Lageausgleich erfolgen, insbesondere können ein Versatz und/oder eine axiale Phasenlage ausgeglichen werden. Die Vorverbindung kann stabil sein bei gegenseitiger Krafteinwirkung der Steckverbindermodule. Es können intrinsische Fehler in einem Versatz und/oder einer Achsfluchtung ausgeglichen werden. Die Vorverbindung kann aktiv bewegt werden, um weitere Fehler auszugleichen. Gegebenenfalls kann die Vorverbindung wieder geöffnet und erneut geschlossen werden, um einen weiteren Lageausgleich zu ermöglichen. Ein Lageausgleich kann insbesondere durch Rotation eines Steckverbindermoduls oder beider Steckverbindermodule erfolgen.

Zum Heranziehen können das erste Steckverbindermodul und das zweite Steckverbindermodul unter Verwendung einer beim Vorverbinden hergestellten Vorverbindung zueinander gezogen werden. Eine öffen- und schließbare Schutzeinrichtung kann geöffnet werden.

Zum Endverbinden können das erste Steckverbindermodul und das zweite Steckverbindermodul unter Verwendung einer beim Vorverbinden hergestellten Vorverbindung miteinander mechanisch sowie zur Signal-, Energie- und/oder Stoffübertragung endverbunden werden. Beim Endverbinden kann eine Kontaktfähigkeit, insbesondere eine Verschmutzung, des ersten Steckverbindermoduls und/oder des zweiten Steckverbindermoduls geprüft werden. Gegebenenfalls können das erste Steckverbindermodul und/oder das zweite Steckverbindermodul gereinigt werden. Ein Reinigen kann beispielsweise durch Ausblasen oder Spülen erfolgen. Beim Endverbinden kann eine Federeinrichtung vorgespannt werden. Eine erfolgreiche Endverbindung kann mithilfe elektrischer Kontakte bestätigt werden.

Zum Verriegeln kann die beim Endverbinden hergestellte Endverbindung mechanisch verriegelt werden. Nach dem Endverbinden und/oder Verriegeln kann eine Signal-, Energie- und/oder Stoffübertragung etabliert werden. Nach dem Endverbinden und/oder Verriegeln kann eine Vorverbindung geöffnet werden. Eine erfolgreiche Endverbindung und/oder Verriegelung kann durch elektrische Messung bestätigt werden. Es kann eine axiale Verdrehung bezüglich einer Ausgangslage und/oder ein axialer Phasenversatz zwischen dem ersten Steckverbindermodul und/oder dem zweiten Steckverbindermodul bestimmt werden, beispielsweise mithilfe eines Encoders oder Resolvers an einem drehbaren Abschnitt eines Steckverbindermoduls. Diese Information kann an andere Module zur weiteren Verwertung weitergeleitet werden. Insbesondere kann diese Information an andere Rechen und Robotermodule zur Lagekorrektur und zur korrekten Durchführung von Koordinaten- und Lageberechnungen weitergeleitet werden. Zur Sicherstellung eines Betriebs können perodische Nachmessungen durchgeführt werden.

Das erste Steckverbindermodul und das zweite Steckverbindermodul können zueinander rotatorisch ausgerichtet werden. Das erste Steckverbindermodul und das zweite Steckverbindermodul können beim Einfangen, Vorverbinden und/oder Heranziehen zueinander rotatorisch ausgerichtet werden.

Außerdem wird die der Erfindung zugrundeliegende Aufgabe gelöst mit einem Verfahren zum automatisierten Lösen einer derartigen Steckverbinderanordnung, wobei das erste Steckverbindermodul und das zweite Steckverbindermodul zunächst miteinander mithilfe einer Vorverbindung und einer verriegelten Endverbindung zur Signal-, Energie- und/oder Stoffübertragung verbunden sind und das Verfahren folgende Schritte aufweist: Beenden einer Signal-, Energie- und/oder Stoffübertragung zwischen dem ersten Steckverbindermodul und dem zweiten Steckverbindermodul; Trennen des ersten Steckverbindermoduls und des zweiten Steckverbindermoduls voneinander.

Das Verfahren kann ausgehend von einer geschlossenen Steckverbinderanordnung durchgeführt werden. Unter "automatisiert" kann vorliegend auch ein teilautomatisiertes Lösen verstanden werden. Das Lösen kann ferngesteuert beeinflusst werden. Das Lösen kann autonom erfolgen. Mithilfe der Schritte kann das Lösen mehrfach unterteilt sein.

Zum Trennen des ersten Steckverbindermoduls und des zweiten Steckverbindermoduls voneinander kann zunächst die Vorverbindung und nachfolgend die Endverbindung gelöst werden. Zum Trennen des ersten Steckverbindermoduls und des zweiten Steckverbindermoduls voneinander kann zunächst die Endverbindung und nachfolgend die Vorverbindung gelöst werden. Das erste Steckverbindermodul und das zweite Steckverbindermodul können voneinander unter Einbringung eines Impulses gelöst werden. Der Impuls kann von einer vorgespannten Federeinrichtung ausgehen. Das erste Steckverbindermodul und das zweite Steckverbindermodul können voneinander schlagartig gelöst werden. Das erste Steckverbindermodul und das zweite Steckverbindermodul können voneinander zumindest annähernd kraftlos gelöst werden. Eine Distanzierung des ersten Steckverbindermoduls und des zweiten Steckverbindermoduls voneinander kann mithilfe einer Greifeinrichtung durchgeführt werden.

Im Übrigen können zum Trennen des ersten Steckverbindermoduls und des zweiten Steckverbindermoduls voneinander die Schritte, die beim Verbinden durchlaufen wurden, in umgekehrter Reihenfolge durchlaufen werden. Nach dem Trennen kann eine öffen- und schließbare Schutzeinrichtung des ersten Steckverbindermoduls und des zweiten Steckverbindermoduls geschlossen werden.

Zusammenfassend und mit anderen Worten dargestellt ergibt sich somit durch die Erfindung unter anderem ein mechatronisches Steckverbindersystem für extreme Umgebungen, insbesondere für Weltraum und Tiefsee. Die Erfindung kann insbesondere durch folgende Merkmale und/oder Kombinationen von Merkmalen gekennzeichnet sein: Zerlegung des Dockingprozesses in die Schritte Einfangen, Umschließen/Binden, Heranziehen, Stecken, Verriegeln, gegebenenfalls nochmals Herstellung von Kontakten; krakenartige, organisch-bionische Struktur, Finger; Einschnürung durch Seilzüge/Backen; Einschnürung hydraulisch/Backen, und zwar mit unterschiedlichen Kraftansätzen (axial, radial); Einschnürung durch hydraulisch aufgeblähte Kissen; Kraft für die Einschnürung kommt aus einer Iris-Mechanik; modularer Aufbau, Steckereinsätze wechselbar; elektrisches Übertragungsteil als Einsatz, ringförmig um den Steckereinsatz; optisches Datenübertragungsteil mit Kollimatoren und Fluchtung der optischen Strahlanordnung; Stecker mit federgespannten Kontakten zum Ausgleich von Steckertoleranzen; für elektrisches Übertragungsteil permeable Elastomerschicht auf dem Kernende zum Ausgleich von Stecktoleranzen; für Datenübertragungsteil und Kontakte Iris, Klappe o.ä. zur Verhinderung von Staubbelag; Iris zum Einschnüren kann komplett zum Abdecken des Steckfeldes verschlossen werden; als Gegenmaßnahme gegen Staub Wiper, elektrostatische Aufladung etc.; beim Heranziehen des Dockingpartners wird dieser an einer Kontur, wie Tetraeder, Pyramide, etc., mechanisch ausgerichtet; für submarine Anwendung Einrichtung, damit Wasser verdrängt wird, bzw. restliches Wasser ohne Beeinträchtigung toleriert werden kann; für submarine Anwendung Einschluss der Komponenten in ölgefüllte Gummihaut; mechanische Endstabilität wird bevorzugt beim Verriegeln hergestellt; mechanische Entkopplung des Steckfeldes, bspw. durch Federung oder weitere mechanische Einrichtung, zusätzliche Ausgliederung des Steckvorgangs selbst möglich; Steckereinsatz um bspw. +/- 45° im Steckergehäuse drehbar, dadurch Erhöhung der Stecktoleranz; Drehung des Steckereinsatzes erfolgt beim Einfahren in das Steckerprofil, bspw. Tetraeder- oder Pyramidenform bzw. Anschrägung der Kontaktfläche; Drehung des Steckereinsatzes bzw. des Koppelpartners geschieht durch Magnete gleicher Polarisierung, welche entsprechend in die Koppelpartner eingebracht sind; Fangzone bzw. Fangvolumen, in welches der Steckpartner gebracht werden muss um einen erfolgreichen Steckzyklus zu erhalten; Teilweise Durchführung des Steckvorgangs ermöglicht Reinigung der Kontakte durch den Master, nur Einschnürung aktiv, ohne dass physikalische Kraft den Koppelpartner abdriften lässt; Steckereinsatz mechanisch aktiv/passiv vorgespannt, damit im verriegelten Zustand der Steckvorgang durch Entspannung der Federn am Steckereinsatz durchgeführt werden kann; einfaches, optisches/magnetisches Messsystem nur mit Fototransistor, Laser, etc. für die Vororientierung; Adapterelement, welches zwei aktive Koppelpartner miteinander verbindet; elektrische Kontaktelemente in den Fingern; Übertragung von Energie bereits nach Vorfixierung; Übertragung von Energie drahtlos in beide Richtungen; Messung der axialen Phasenablage nach Abschluss des Steckvorgangs mit Hilfe geeigneter Sensoren, wie Encoder, optisch, magnetisch, Kodierung; aktives Zurückziehen der Steckfelder; Seil-Iris, feste Stangen/Bögen statt Seile; Einschnürungstechnologie auch zum Verriegeln; Zahnradanordnung mit epizykloider Bahn zur Verriegelung; passiver Koppelpartner besitzt eine geringe Zahl, im Rahmen der Toleranz bspw. 2-5, von Sendern, bspw. optischen, verteilt um den Umfang, die ein kodiertes Signal senden, somit lässt sich die Orientierung vor der Vorfixierung leichter ermitteln.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der Erfindung soll ein Verfahren bereitgestellt werden, das in rauen Umgebungen, insbesondere im Weltraum und/oder in der Tiefsee, durchführbar ist. Ein Verbindungsvorgang und/oder ein Lösevorgang werden aktiv unterstützt. Eine Toleranz wird erhöht. Eine Sicherheit wird erhöht. Eine Eignung zur Standardisierbarkeit wird erhöht. Ein Ausfallrisiko wird reduziert. Ein Aufwand, wie Kostenaufwand und/oder technischer Aufwand, wird reduziert. Eine Kompatibilität wird erhöht. Externe Komponenten können entfallen oder vereinfacht werden. Das Verfahren ist variabel einsetzbar.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:

Fig. 1 zwei Varianten einer automatisiert verbindbaren Steckverbinderanordnung mit einem aktiven ersten Steckverbindermodul und einem passiven zweiten Steckverbindermodul,

Fig. 2 ein aktives erstes Steckverbindermodul mit Greifarmen,

Fig. 3 ein passives zweites Steckverbindermodul,

Fig. 4 ein automatisiertes Verbinden eines aktiven ersten Steckverbindermoduls mit Greifarmen mit einem passiven zweiten Steckverbindermodul,

Fig. 5 ein aktives erstes Steckverbindermodul mit fester Stützstruktur,

Fig. 6 ein automatisiertes Verbinden eines aktiven ersten Steckverbindermoduls mit fester Stützstruktur mit einem passiven zweiten Steckverbindermodul,

Fig. 7 einen Hypotrochoid-Machanismus,

Fig. 8 einen Irismechanismus mit Haltespangen in geschlossener und in geöffneter Position,

Fig. 9 ein Steckfeld mit radialen Kontaktelementen,

Fig. 10 einen Prozessablauf bei einem automatisierten Verbinden einer Steckverbinderanordnung und

Fig. 11 einen Prozessablauf bei einem automatisierten Lösen einer Steckverbinderanordnung.

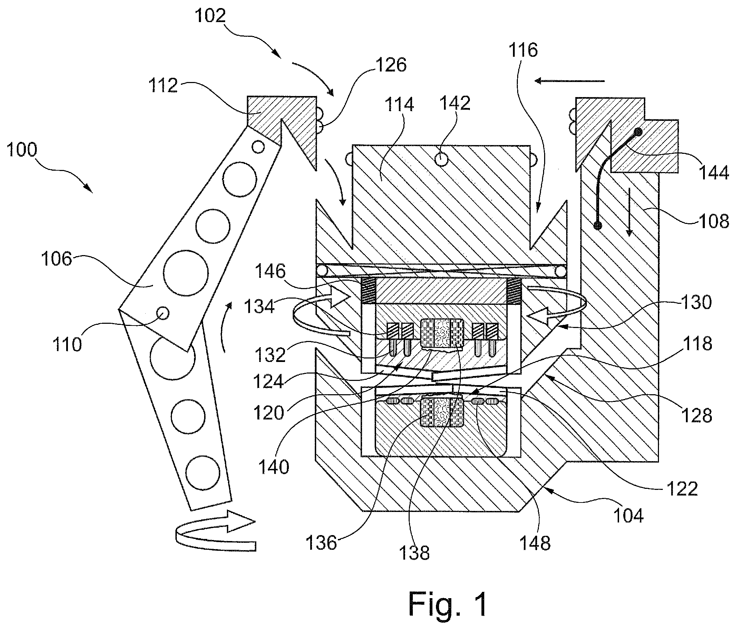

Fig. 1 zeigt zwei Varianten einer automatisiert verbindbaren Steckverbinderanordnung 100 mit einem aktiven ersten Steckverbindermodul 102 und einem passiven zweiten Steckverbindermodul 104. In der linken Hälfte der Fig. 1 ist eine Variante mit Greifarmen, wie 106, gezeigt. In der rechten Hälfte der Fig. 1 ist eine Variante mit einer festen Stützstruktur 108 gezeigt.

Die Steckverbinderanordnung 100 dient zum Koppeln mechatronischer Systeme insbesondere im Weltraum oder in der Tiefsee. Die Steckverbinderanordnung 100 ist im Wesentlichen in zwei Teile 102, 104 geteilt. Dabei bezeichnet der sogenannte "aktive Koppelpartner" 102 den Teil des Kopplungssystems 100, welcher den aktiven Teil eines Kopplungsvorgangs übernimmt. Dazu ist dieser Teil 102 mit entsprechenden Mitteln ausgestattet. Der sogenannte "passive Koppelpartner" 104 wird während des Kopplungsprozesses vom aktiven Koppelpartner 102 eingefangen und weist erfindungsgemäß eine einfachere Struktur auf. Der aktive Koppelpartner 102 weist eine sogenannte "Fangzone" auf, welche einen Aufenthalts- bzw. Eintrittsbereich innerhalb der Strukturreichweite des aktiven Koppelpartners 102 beschreibt, in welche der passive Koppelpartner 104 eintreten muss, um einen positiv verlaufenden Kopplungsvorgang einzuleiten. Die positive Verortung des passiven Koppelpartners 104 innerhalb der Fangzone kann dazu über nachfolgend beschriebene Elemente über den aktiven Koppelpartner 102 festgestellt werden.

In weiteren Ausführungsvarianten kann die Struktur um ein drittes, passives Bauteil erweitert werden, um auch zwei aktive Koppelpartner, wie 102, miteinander zu verbinden. Dieses Bauteil ist dabei ein doppelt ausgeführtes, passives Koppelteil, welches dessen Eigenschaften wie nachfolgend beschrieben, aufweist.

Der Steckprozess weist bevorzugt mindestens eine Passage zur Vorfixierung, das sogenannte "Einfangen", sowie mindestens eine Passage zur Verriegelung auf, wobei die mechanische Endstabilität bevorzugt durch die mechanische Endverriegelung erzielt wird.

Gemäß der in der linken Hälfte der Fig. 1 gezeigten Variante weist die Dockingvorrichtung 100 auf der Seite des aktiven Koppelpartners 102 mehrgliedrige Manipulatoren, auch als Greifarme 106 oder Finger bezeichnet, auf, welche die Aufgabe der Vorfixierung und der Herstellung des notwendigen Toleranzbereiches, also Korrekturen des Versatzes, der axialen Phasenablage und der Achsenfluchtung vornehmen. Dabei weisen diese Finger mindestens zwei rotatorische Gelenke, wie 110, auf. Ein Fußgelenk, welches den Finger mit dem Interface verbindet, ist vorzugsweise um zwei Achsen drehbar. Demnach hat der Finger somit bevorzugt drei Freiheitsgrade, aber mindestens zwei Freiheitsgrade. Die gleichsinnigen Freiheitsgrade aller Finger können von jeweils einem Antrieb gesteuert werden, somit weist die Anordnung vorzugsweise zwei Antriebe auf, welche gemeinsam alle Finger ansteuern.

An der Spitze des Fingers 106 befindet sich erfindungsgemäß ein mechanisches Kontaktelement 112, welches eine definierte Kontur aufweist, deren Gegenstück sich im Koppelteil 114 des passiven Koppelpartners 104 wiederfindet. Das Gegenstück kann eine umlaufende, profilierte Nut 116 sein. Für Tiefseeanwendungen kann diese Kontur sehr einfach ausfallen, bspw. lediglich eine runde Nut, und ein Wegrutschen kann durch die Ausstattung der Kontaktelemente 112 mit einer entsprechenden Oberfläche erfolgen, welche eine hohe Reibungskonstante aufweist, wie bspw. Gummi auf Gummi. Für Weltraumanwendungen kommen bevorzugt vorwiegend metallische Komponenten zur Anwendung, je nach Mission und den entsprechenden Umweltbedingungen können auch spezialisierte Elastomere zu diesem Zweck eingesetzt werden.

Weiterhin weist die Anordnung Elemente auf, welche einen elektrischen Kontakt zum Koppelpartner herstellen, um den Koppelpartner bereits bei der Vorfixierung mit Energie zu versorgen. Dazu weist die negative Kontur des Koppelpartners 104 entsprechende leitfähige Flächen auf, welche nach der Vorfixierung elektrisch mit den entsprechenden leitfähigen Gegenflächen des Fingers 106 kontaktieren.

Die Versorgung der Finger 106 mit mechanischer Energie erfolgt beispielsweise hydraulisch, pneumatisch oder elektromotorisch, wobei sich in Antrieben oder jeweils in Gelenken Sensoren befinden, welche einen Gelenkwinkel, eine Kraft am Gelenk und/oder ein Drehmoment über dem Gelenk messen. Auf diese Weise ist es möglich, eine Position und eine eingebrachte Kraft auf das Koppelstück 114 des passiven Koppelpartners 104 zu regeln und komplexe Bewegungsmuster zum Ausgleich von Versatz und Lage zu kommandieren. Mit Hilfe dieser Elemente ist der initiale Koppelprozess sehr flexibel.

Das Dockinginterface 102 kann aktiv den Koppelpartner 104 für den weiteren Koppelvorgang vorfixieren. Hierzu weist jede Ausführungsform eine Form der Einschnürung oder Einengung des Koppelpartners auf um die Fixierung zu erzielen.

Zum Schutz der Steckerelemente der Daten- und Energieübertragung weisen beide Koppelpartner 102, 104 bevorzugt eine Iris 122, 124 auf, welche sich in vorliegend direkt über den Steckerelementen als Abdeckung befindet. Diese Iris 122, 124 wird vor dem Zusammenfahren der Koppelpartner 102, 104 geöffnet und ist vorzugsweise in Richtung des passiven Koppelstücks 104 gekrümmt um die Ablagerung von Schmutz zu vermeiden. Weiterhin ist die Iris 122, 124 für Weltraumanwendungen an einen hochfrequenten Wechsel-Gleichspannungsgenerator (Hochspannung) angeschlossen, um auf der Iris 122, 124 haftenden Staub mittels Veränderung der statischen Aufladung zu entfernen.

Erfindungsgemäß besitzen die Finger 106 an den Kontaktelementen 112 geeignete drucksensitive, magnetische und/oder optische Sensoren, wie 126, welche grob die Position und die Lage des in der Nähe befindlichen oder fixierten, passiven Koppelpartners 104 ermitteln können. Auf diese Weise ist es möglich, die Enden der Finger 106 in eine für die Vorfixierung notwendige Position zu fahren und gleichzeitig eine hohe Toleranz zuzulassen. Außerdem ermöglichen die Drucksensitiven Sensoren 126 die Messung der Kontaktkraft zum passiven Koppelpartner 104. Beispielsweise sind für eine Anwendung im Weltraum an den Fingerspitzen optische Näherungssensoren untergebracht. Bei Tiefseeanwendungen sind dies beispielsweise ultraschallbasierte Näherungssensoren.

Nach Durchführung der ersten Vorfixierung kann eine schlechte Lage zwischen den Koppelpartnern 102, 104 durch ausgleichende Fingerbewegungen und erneutes Öffnen und Schließen der Vorfixierung ausgeglichen werden. Liegt die Ablage beider Koppelpartner 102, 104 im Rahmen der für das Docking möglichen Toleranz, so wird der passive Koppelpartner 104 mit Hilfe der Finger 106 an den aktiven Koppelpartner 102 herangezogen. Das Steckfeld 118, 120 beider Koppelpartner ist analog zu den Fingerspitzen mit einer definierten Kontur 128, 130 - beispielsweise ein Dreieck mit abgerundeten Ecken - eingefasst, darüber hinaus weist die Kontur 128, 130 im Schnitt entlang der Koppelachse abgerundete Kanten auf, sodass die beiden Koppelkonturen 128, 130 automatisch ineinander fahren. Die Kontur 128, 130 geht im weiteren Achsenverlauf in Richtung des jeweiligen Geräteteils (vom Ende weg) in einen Querschnitt über, welcher dem Grundquerschnitt des Koppelstücks entspricht, also beispielsweise rund ist. Weiterhin kann die Kontur 128, 130 einen Querschnitt aufweisen, welcher ein axiales Drehmoment der beiden Steckereinsätze 118, 120 in Richtung der zueinander optimalen Steckposition, bevorzugt in eine vorgegebene Drehrichtung a, erzwingt. So weisen beispielsweise abgerundete Tropfenformen eine solche Eigenschaft auf. Weiterhin kann die Kontaktfläche der beiden Koppelpartner 102, 104 im Bereich der Kontur 128, 130 in der rechtwinklig zur Steckerachse verlaufenden Ebene so verkippt sein, dass ein entsprechendes Drehmoment in die korrekte axiale Position durch die schräge Kontaktfläche erzeugt wird. In einer weiteren Variante kann die Drehung der Steckereinsätze 118, 120 zur Korrektur der radialen Phasenablage durch Magnete erfolgen, welche im Umfang des Steckereinsatzes 120 im passiven Koppelpartner 104 und im inneren Umfang der Aufnahme des aktiven Koppelpartners 102 so angebracht sind, dass sich die Drehung durch Abstoßen bzw. Anziehen entsprechender Magnetpole ergibt. Beispielsweise sind die Magnete dabei so angebracht, dass sich gleiche Pole im aktiven und im passiven Koppelpartner abstoßen. Somit wird verhindert, dass sich die Verbindung aufgrund der Anziehung gleicher Magnetpole nur unter zusätzlichem Kraftaufwand lösen lässt.

Mindestens einer der beiden Steckereinsätze 118, 120 einschließlich der Kontur 128, 130 ist drehbar gelagert, um der aus der axialen Phasenablage entstehenden Radialkraft nachzugeben. Die drehbar gelagerten Steckereinsätze 118, 120 sind radial mit Federn leicht vorgespannt, um im nicht gesteckten Zustand in die Ausgangslage zurückzukehren.

Die Steckerelemente, wie 132, sind in den Konturen 128, 130 axial in Richtung des jeweiligen Geräteteils vom Ende weg verschiebbar und analog zu der radialen Aufhängung mit Federn, wie 134, so vorgespannt, dass sie im nicht gesteckten Zustand in Richtung des jeweiligen Endes des Koppelstücks bis zu einem Anschlag ausrücken. Durch diese Eigenschaft wird eine axiale Toleranz hergestellt und gleichzeitig ein für die Kontakte schonender Effekt erzielt. Die Steckkraft für die Kontakte wird erfindungsgemäß über die Auslegung der Federn 134 festgelegt.

Alternativ können die jeweiligen Steckfeldern 118, 120 über eine hydraulische Einrichtung, einen elektrischen Spindelantrieb oder eine vergleichbare Einrichtung aktiv im herangezogenen oder verriegelten Zustand gesondert zusammen- und auseinander gefahren werden. Dies kann erforderlich sein, falls erhöhte Steckkräfte, bspw. für hydraulische Steckverbinder notwendig sind.

Die Steckfelder 118, 120 können so segmentiert und modular aufgebaut sein, dass unterschiedliche Kontakte zur Übertragung von elektrischen Signalen - also Energie und Daten - hydraulische transportierte Energie (Druck und Temperatur) sowie auch optische Leitungen (LWL) zur Übertragung von Video- und Dateninformationen im gesteckten Zustand übertragen werden können und die Belegung des Steckers je nach geplanter Mission einfach über das Einsetzen fertiger Module bei der Endmontage festgelegt wird.

Insbesondere werden für die optische Datenübertragung am Ende der Faser Kollimatoren eingesetzt, welche den Strahl aufweiten und den Strahlverlauf parallelisieren. Somit ist es möglich, Daten bereits vor Abschluss des Steckvorgangs zu übertragen was die Fehlertoleranz des Systems erhöht. Je nach Auslegung des Systems kann es vorgesehen sein, leckagefreie Hydraulikstecker, welche mit einer Heizvorrichtung versehen sind, als modularen Einsatz im Interface zu verwenden. Die Heizvorrichtung ermöglicht insbesondere für das Szenario im Weltraum, ein gefrorenes Hydraulikfluid zur Sicherung des korrekten Betriebs zu schmelzen und dessen Viskosität festzulegen. Die Heizung ist dazu bevorzugt mit Sensoren ausgestattet, um die Temperatur regeln zu können.

Die Steckerelemente 118, 120 sind vorzugsweise radial auf das jeweilige Steckerelement verteilt und so zu Einsatzelementen gruppiert, dass für die Applikation zusammenhängende Stecker nahe zusammen liegen. Dies erleichtert die Suche nach Systemfehlern.

Die Steckfelder 118, 120 weisen zur Drahtlosen Energieübertragung jeweils ein Spulenpaket 136, 138 auf, welches auf beiden Seiten, also auf der Primär und Sekundärseite, jeweils mit einem zuschaltbaren Gleich- und Wechselrichter versehen ist. Das Spulenpaket 136, 138 ist bevorzugt segmentiert, sodass mehrere getrennte Einzelspulen ringförmig um das Steckfeld 118, 120 angeordnet sein können. Auf diese Weise ist es möglich, Energie redundant in beide Richtungen, also vom aktiven zum passiven Koppelpartner und umgekehrt, zu übertragen. Die Richtung, in welche die Energie übertragen werden soll, wird nach der initialen Verbindungsherstellung bei Abschluss des Steckprozesses über die Kommunikation der beiden Koppelpartner festgelegt. Ist der passive Koppelpartner 104 ohne Energie, so kann der aktive Koppelpartner 102 im Standardfall damit beginnen, Energie drahtlos an den passiven Koppelpartner 104 zu senden. Bevorzugt wird dabei ein festgelegtes, minimales Energieniveau nicht überschritten, um die Elektronik des passiven Koppelpartners 104 nicht zu überlasten, auch kann die Energieübertragung zu diesem Zweck nur über kurze Zeiträume aktiviert sein. Reicht die Energie im passiven Koppelpartner 104 aus, um das System zu aktivieren, kann der passive Koppelpartner 104 die Menge der vom aktiven Koppelpartner 102 erhaltenen Energiemenge über eine Datenverbindung an den aktiven Koppelpartner 102 zurücksenden. Somit besteht die Möglichkeit der Regelung der übertragenen Energiemenge um die Bauteile zu schonen und den Wirkungsgrad der drahtlosen Energieübertragung zu erhöhen. Die Regelung der übertragenen Energiemenge ist zum Zwecke der Erhöhung der Sicherheit des Gesamtsystems für beide Richtungen, also auch vom passiven zum aktiven Koppelpartner vorgesehen.

Das Anwendungsszenario für die bidirektionale, drahtlose Energieübertragung ist hierbei beispielsweise die Verwendung von wiederaufladbaren Energiepacks im Weltraum oder der Tiefsee, also in rauen, extremen Umgebungen.

Je nach Anwendung kann es bevorzugt sein, dass das Steckfeld 118, 120 hermetisch abgedichtet ist und lediglich eine drahtlose Energie- und Datenübertragung, vorzugsweise bidirektional, aufweist. Daten werden bevorzugt optisch übertragen, allerdings kann zum Zwecke der Diversität eine Datenübertragung auch durch Aufmodulierung der drahtlosen Energieübertragung erfolgen. Alternativ zu einer magnetisch gekoppelten, drahtlosen Energieübertragung kann auch eine kapazitiv gekoppelte, drahtlose Energieübertragung verwendet werden. Dabei werden dann analog zur beschriebenen Integration von Spulen 136, 138 entsprechend segmentierte Kondensatorflächen in das Steckfeld integriert.

Die Flächen auf den Elementen zur drahtlosen Energieübertragung können mit einer dünnen Elastomerschicht, wie 140, versehen sein, welche je nach Übertragungsart mit einem hochpermeablen oder hochpermittiven Füllstoff versehen ist. Beim Zusammenfahren der Steckflächen werden so die Luftspalte minimiert und etwaige Flüssigkeit (bei Tiefseeanwendungen) aus dem Zwischenraum gepresst. Ebenso kann sich um vorhandene Steckerpins eine reguläre, isolierende, dünne Elastomerschicht befinden, welche beim Zusammenstecken den Steckerpin zur Umgebung isoliert. Auf diese Art und Weise ist es vor Allem bei Tiefseeanwendungen möglich, vorhandene Flüssigkeit zu entfernen und die Kontakte zuverlässig gegeneinander zu isolieren.

Nach dem Zusammenfahren der Koppelpartner 102, 104 ist es erforderlich, die Koppelelemente 102, 104 zu verriegeln um die Vorfixierung und die Finger 106 mechanisch zu entlasten. Hierzu sind in den Teil des passiven Koppelpartners 104, welcher nicht drehbar ist und sich zwischen der Nut 116 zur Vorfixierung und dem drehbaren Teil der Steckereinsätze befindet, eine weitere Nut eingelassen. In diese Nut greift nun ein zweiter, vom Vorfixierungsmechanismus unabhängiger Teil der Anordnung mit Hilfe einer zweiten Iris, beweglichen Backen oder ähnlichem ein. Dabei ist der bewegliche Fixierungsteil im aktiven Koppelpartner 102 so ortsfest untergebracht, dass nach Abschluss der Fixierung eine hohe mechanische Stabilität zwischen den beiden Koppelpartnern 102, 104 erzielt wird.

Die Koppelpartner 102, 104 weisen an den drehbaren Steckermodulen 118, 120 eine Vorrichtung auf, welche die Messung der Axialen Verdrehung zum nicht drehbaren Teil der Dockingvorrichtung und ferner im gesteckten Zustand die axiale Phasenablage zwischen den Koppelpartnern 102, 104 erlauben. Bevorzugt handelt es sich dabei um Encoder, Resolver oder GMR-Sensoren mit Encoderfunktionalität. Diese Sensoren sind mit dem Steuerungs- und Kommunikationssystem so verbunden, dass die Information über die Verdrehung der beiden Koppelpartner, 102, 104 zueinander bzw. des Steckereinsatzes 118, 120 in den jeweiligen Koppelpartner für Zwecke der Regelung, der Berechnung von Roboterkoordinaten und zu Sicherheitszwecken an andere Systeme weiterverteilt werden kann.

Weiterhin weisen bevorzugt die passiven Koppelpartner 104 im Umfang des nicht drehbaren Koppelteils, welcher sich bei der Vorfixierung innerhalb der Fangzone befindet, Sender auf, welche bevorzugt auf optischem Wege ein kodiertes Signal aussenden um die Orientierung der Koppelpartner 102, 104 bei der Vorfixierung leichter feststellen zu können.

Die beschriebene Anordnung weist die Eigenschaft auf, in einem gesonderten Betriebsmodus die Finger 106 wie bei einem regulären, robotischen Greifer anzusteuern um somit, bspw. in einem Notfall, einfache Manipulationsaufgaben durchführen zu können.

Die Steckverbinderanordnung 100 kann unter anderem Folgendes aufweisen: Mehrgliedrige Fingerstruktur 106 mit Gelenken, wie 110, in mehreren Ebenen; Koppelstück 112 zur Vorfixierung am distalen Ende der Vorfixierungsstruktur, enthält bevorzugt einfache Kontaktelemente zur Erstversorgung des passiven Koppelpartners 102; Detektions- und Distanzmesseinrichtung 126 zur Feststellung der Lage und Orientierung des Koppelpartners sowie der Überwachung der Fangzone (Sender/Empfänger); Aktive oder passive Sendeeinrichtung 142 zur Unterstützung der Detektions- und Distanzmesseinrichtung 126 und zur Herstellung einer einfachen Erstkommunikation; Kontur 130 am passiven Koppelpartner 104 zur Vorfixierung; Kontur/Schiene 144 zur Ermöglichung einer mehrdimensionalen Bewegung des Koppelstücks 112 entlang der starren Vorfixierungsstruktur 108; Starre Vorfixierungsstruktur 108; Vorspannfeder 146 für Steckfeld 118; Vorspannfeder 134 für Kontaktelemente 132; Schutzirismechanik 122, 124 zur Abdeckung des Steckfeldes 118, 120 oder von Steckerelementen 132; Spule 136, 138 mit jeweils Gleich- und Wechselrichter auf beiden Seiten zur drahtlosen Energieübertragung; Kontaktflächen 148 als Gegenstück zu federgelagerten Kontakten 132; Geometrische Passung 128, 130 der beiden Koppelpartner 102, 104 zur automatischen Zentrierung und Orientierung; Lager 150, vorzugsweise begrenzt und radial mit Federn vorgespannt, um eine Rotation des Steckfeldes 118 zu ermöglichen; Elastische Ausgleichsbeschichtung zur Herstellung eines optimalen, permittiven Übergangs oder zur Verdrängung von Wasser in Tiefsee-Anwendungen; Steckfeld 118, 120 zur Aufnahme von elektrischen, hydraulischen, optischen und drahtlosen Kontakten; beweglich (axial, rotational).

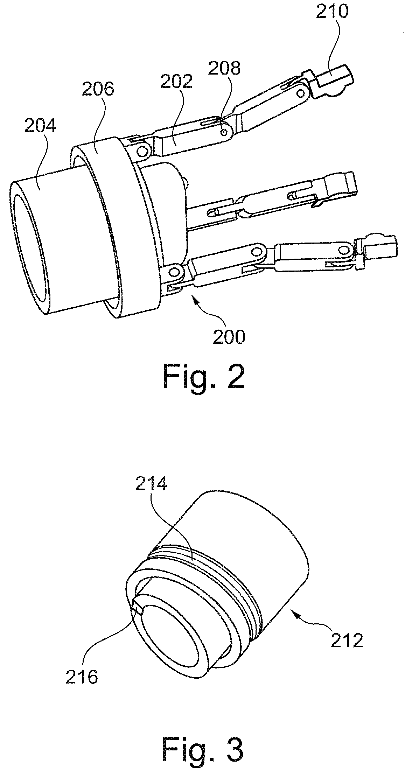

Fig. 2 zeigt ein aktives erstes Steckverbindermodul 200 mit bewegbaren Greifarmen, wie 202. Das erste Steckverbindermodul 200 weist einen Basisabschnitt 204 auf. Die Greifarme 202 sind mithilfe einer ringförmigen Trägerstruktur 206 wechselbar an dem Basisabschnitt 204 angeordnet. Die Greifarme 202 weisen jeweils mehrere Gelenke, wie 208, und an ihrem freien Ende einen Greifabschnitt 210 auf. Ein Bereich, in dem die Greifabschnitte 210 durch Bewegen der Greifarme 202 greifen können, kann als Fangbereich bezeichnet werden. Das greifarmseitige Ende des Basisabschnitts 204 ist abgeschrägt ausgeführt, um eine automatische Steckerorientierung beim Verbindung zu unterstützen. Im Übrigen wird ergänzend insbesondere auf Fig. 1 und die zugehörige Beschreibung verwiesen.

Fig. 3 zeigt ein passives zweites Steckverbindermodul 212. Das zweite Steckverbindermodul 212 ist endseitig ebenfalls abgeschrägt ausgeführt, um eine automatische Steckerorientierung beim Verbindung zu unterstützen. Das zweite Steckverbindermodul 212 weist eine Nut 214 auf, in die die Greifabschnitte 210 des ersten Steckverbindermoduls 200 zur Vorfixierung eingreifen können. Das zweite Steckverbindermodul 212 weist endseitig Ausnehmungen, wie 216 auf, um eine Einrasten in der korrekten Steckposition zu ermöglichen. Im Übrigen wird ergänzend insbesondere auf Fig. 1-2 und die zugehörige Beschreibung verwiesen.

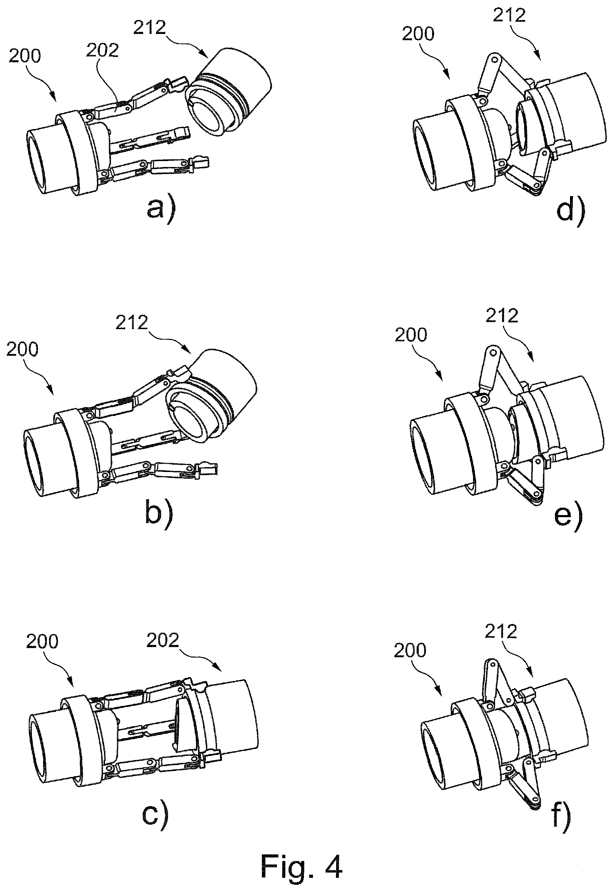

Fig. 4 zeigt ein automatisiertes Verbinden des aktiven ersten Steckverbindermoduls 200 mit Greifarmen 202 mit dem passiven zweiten Steckverbindermodul 212. In einem ersten Schritt a) erfolgt eine Annäherung der beiden Steckverbindermodule 200, 212 und die Greifarme 202 greifen nach dem zweiten Steckverbindermodul 212. In einem folgenden Schritt b) erfolgen eine grobe Vororientierung und ein Eintritt in die Fangzone. In einem folgenden Schritt c) erfolgt eine Vorfixierung des Steckverbindermoduls 212 durch das Steckverbindermodul 200. In einem folgenden Schritt d) wird das Steckverbindermodul 212 von dem Steckverbindermodul 200 herangezogen. In einem folgenden Schritt e) wird durch einen mechanischen Kontakt der Steckverbindermodule 200, 212 beim Heranziehen eine radiale Phasenlage ausgeglichen. In einem folgenden Schritt f) erfolgen ein vollständiges Heranziehen und ein Stecken der Kontaktblöcke. Im Übrigen wird ergänzend insbesondere auf Fig. 1-3 und die zugehörige Beschreibung verwiesen.

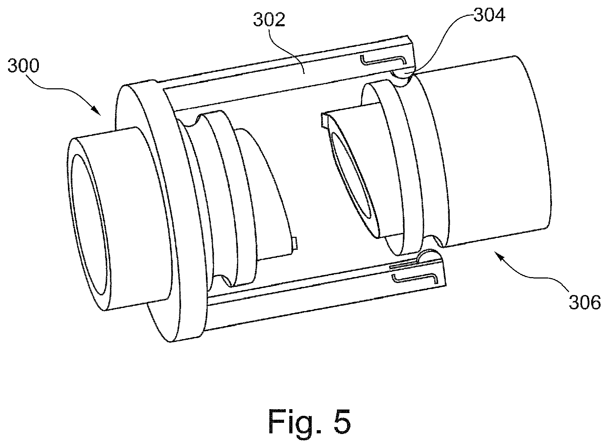

Fig. 5 zeigt ein aktives erstes Steckverbindermodul 300 mit fester Stützstruktur 302. Die Stützstruktur 302 ist radial so am ersten Steckverbindermodul 300 angebracht, dass an deren distalen Enden angebrachte Backen, wie 304, die Vorfixierung übernehmen können. Dabei sind die Backen 304 entlang einer Kurve, welche vorzugsweise durch mechanisch Begrenzungen und Schienen realisiert ist, verschiebbar. Die Kurve erzeugt dabei eine Bahn, welche die Backe 304 beim Verschieben in die Richtung des aktiven ersten Steckverbindermoduls 300 und gleichzeitig in Richtung der zentralen Achse bewegt. Da diese Vorrichtung enorme axiale und radiale Kräfte aufbringen kann, weist die Vorrichtung hier mehrere druckempfindliche Sensoren an den Backen 304 oder deren Befestigungen auf, um ein korrektes Einrasten in die Kontur des passiven zweiten Steckverbindermoduls 306 zu detektieren. Weiterhin wird über geeignete Sensoren die Leistung der Backenantriebe bei ihrer Verschiebung gemessen. Somit ist es möglich, eine Verklemmung oder einen falschen Sitz einer Backe 304 zu detektieren und zu korrigieren. Im bevorzugten Fall sind alle Backen 304 einzeln ansteuerbar, die axiale Bewegung in Richtung des ersten Steckverbindermoduls 300 wird bevorzugt mit üblichen Antrieben realisiert, welche in der Lage sind, hohe Kräfte zu erzeugen, wie Spindel- oder Hydraulikantriebe. Zuletzt genannte sind in der Tiefsee bevorzugt.

Analog zu den zuvor beschriebenen Anordnungen können Sensoren zur Erfassung und Detektion des zweiten Steckverbindermoduls 306 am distalen Ende der Stützstruktur 302 angebracht sein. Im Unterschied zu der zuerst genannten Ausführung soll in diesem Fall eine Korrektur der Lage von dem System durchgeführt werden, welches das Dockinginterface trägt.

Für alle Ausführungsvarianten gilt, dass insbesondere deren mechanische Teile für eine Anwendung in der Tiefsee erfindungsgemäß mit einer flexiblen Gummihaut überzogen werden können. Dabei ist es bevorzugt, die Struktur möglichst wenig zu beeinträchtigen und daher die Gummischicht so dünn zu halten, wie es der jeweilige Einsatz verlangt und die Zwischenräume mit einem Öl aufzufüllen. Somit hält die Anordnung auch den hohen Drücken der Tiefsee stand. Im Übrigen wird ergänzend insbesondere auf Fig. 1-4 und die zugehörige Beschreibung verwiesen.

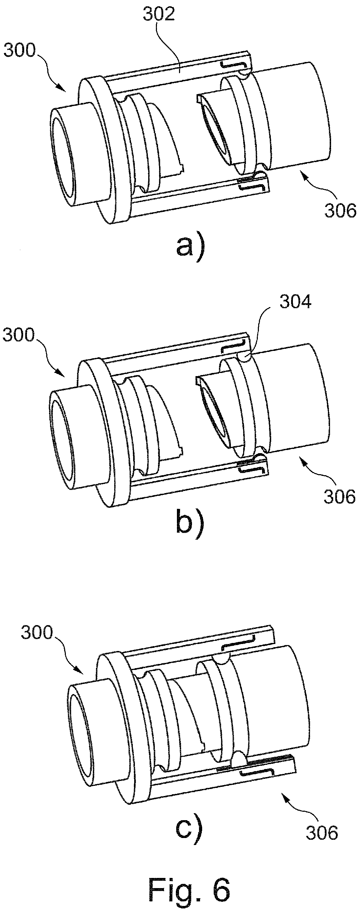

Fig. 6 zeigt ein automatisiertes Verbinden des aktiven ersten Steckverbindermoduls 300 mit fester Stützstruktur 302 mit dem passiven zweiten Steckverbindermodul 306. In einem Schritt a) erfolgen eine grobe Vororientierung und ein Eintritt in die Fangzone. In einem folgenden Schritt b) erfolgt eine Vorfixierung des Steckverbindermoduls 306 durch das Steckverbindermodul 300, indem die Backen 304 entlang einer Kontur in der Stützstruktur 302 radial eingeschoben werden. In einem folgenden Schritt c) wird das Steckverbindermodul 306 von dem Steckverbindermodul 300 herangezogen, wobei eine radiale Phasenablage korrigiert wird und es wird ein Kontakt hergestellt. Im Übrigen wird ergänzend insbesondere auf Fig. 1-5 und die zugehörige Beschreibung verwiesen.

Gemäß einer hier nicht dargestellten weiteren Ausführungsform sind die Greifarme an deren Enden über einen stabilen Ring verbunden, welcher weitere mechanische Komponenten zur Vorfixierung aufweist. Dabei sind die "Fingerspitzen" mit einem Gelenk versehen, welches beispielsweise eine Irismechanik, eine Seil- bzw. Streben-Iris oder mechanische, radial bewegliche Backen trägt. Die Seil-Iris entspricht im wesentlichen Aufbau einer regulären Iris, allerdings wird die mechanische Fixierung des Koppelpartners durch die Einschnürung der entsprechenden Kontur zur Vorfixierung mit Hilfe von Seilen realisiert. Die Seile wickeln sich dabei teilweise um den passiven Koppelpartner und schnüren sich in die Kontur ein. Bei einer Vielzahl von Seilen wird eine gleichmäßige Kraftbelastung auf den Koppelpartner erzielt, wobei die Vorrichtung einfach bleibt. Eine Streben-Iris besitzt statt der Seilverbindungen starre Streben, welche auch gebogen sein können, um im geschlossenen Zustand einen Formschluss mit dem passiven Koppelpartner zu erzielen.

In der ringförmigen Vorfixierungseinheit sind mechanische und elektronische Komponenten untergebracht, welche die Vorfixierung ermöglichen. Analog zu oben beschriebenen Varianten sind im Vorfixierungsring entsprechende Sensoren vorgesehen, welche die Detektion bzw. die Lokalisierung des Koppelpartners in der Fangzone ermöglichen.

Aufgrund des Zusammenschlusses der Finger in einem Ring wird die mechanische Stabilität der Vorfixierung enorm erhöht. Somit bietet die Vorfixierung erfindungsgemäß eine diversitäre Sicherheitseinrichtung für den Fall, dass die Verriegelung versagt. Da bei dieser Ausführungsvariante die Kraft zur Fixierung nicht mehr aus den Fingerantrieben kommen muss, können diese im Hinblick auf deren Gewicht und auf die strukturelle Integrität optimiert werden.

Gemäß einer hier nicht dargestellten weiteren Ausführungsvariante, welche sich insbesondere für Anwendungen in der Tiefsee eignet, sind statt mechanisch aktuierter Backen, der Iris oder dergleichen zur Vorfixierung des passiven Koppelpartners und auch zur Verriegelung der beiden Koppelpartner hydraulisch aufblasbare Kissen vorgesehen. Diese Kissen bestehen aus einer flexiblen, widerstandsfähigen Membran, welche die Einschnürung zur Vorfixierung oder zur Verriegelung durch die Volumenänderung des Kissens herbeiführt. Analog zu den oben beschriebenen Ausführungen weist das Kissen über Fasern oder feste mechanische Elemente geschaffene Verstärkungen auf, welche sich an die entsprechenden Konturen am passiven Koppelpartner festsetzen. Zusätzlich können die Membranen der Kissen über bekannte Fasern, beispielsweise Kohlefasern, so verstärkt werden, dass die Haltbarkeit der Einrichtung und die mechanische Widerstandsfähigkeit erheblich verlängert wird. Zum Schließen oder Lösen der Verbindung wird das Fluidvolumen der Kissen über eine angeschlossene Pumpe entsprechend erhöht oder reduziert.

Gemäß einer hier nicht dargestellten weiteren Ausführungsvariante für den Vorfixierungs- und Verriegelungsmechanismus ist eine Anordnung von ringförmig angeordneten Backen vorgesehen, welche durch einen oder mehrere erste Seilzüge miteinander verbunden sind. Die Backen sind auf radial angeordneten Schienen gelagert und können auf diesen eine konzentrische bzw. exzentrische Bewegung vollführen. Die Seilzüge sind so mit den Backen verbunden, dass beim Anziehen des Seils an einem oder an beiden Enden der Umfang, den das Seil über die Backen beschreibt, verkürzt und zu die Backen in Richtung des Ringmittelpunktes rücken. Die Aktuierung der Seilzugbewegung geschieht dabei mithilfe bekannter Mittel, wie Elektromotoren mit oder ohne Getriebe, Spindelantrieben, Hydraulikantrieben oder ähnlichem. Um die Rückbewegung zu realisieren, sind die Backen bevorzugt mit Federn gegen die Bewegung in Richtung der Steckerachse vorgespannt. Alternativ können die Backen mit einem oder mehreren zweiten, antagonistisch wirkenden Seilzügen ausgestattet sein.

Gemäß einer hier nicht dargestellten weiteren Ausführungsvariante können sich zwei aktive Koppelpartner gegenseitig mit Hilfe der Vorfixierung greifen. Zu diesem Zweck weisen beide bevorzugt im Bereich des Steckfeldes eine Fixierungsstelle mit den zuvor beschriebenen Eigenschaften auf, in welche die beiden Koppelpartner gegenseitig bei entsprechender Orientierung um die Steckachse eingreifen können, sodass sich die Vorfixierungselemente nicht gegenseitig behindern. Für die Ausführungsvariante mit einem Fixierungsring wird einer der beiden Koppelpartnern nach einem festen oder zufälligen Schema für die Festlegung der Rolle, welches über vorhandene Kommunikationselemente ausgetauscht wird, seine Vorfixierungseinheit vollständig soweit zurückfahren, dass der andere Koppelpartner diesen über die entsprechenden Elemente vorfixieren, stecken und verriegeln kann. Bei den Ausführungsvarianten mit Fingern oder Ähnlichem ist lediglich ein Verdrehen der beiden Partner zueinander notwendig.

Gemäß einer hier nicht dargestellten weiteren Ausführungsform besteht eine Basiseinheit zunächst lediglich aus dem Teil, welches in vorhergehenden Passagen als passives Steckverbindermodul bezeichnet wurde. Die Fixierungseinheit nach vorhergehenden Beschreibungen ist allerdings in dieser Variante doppelt ausgeführt, sodass sie an beiden Enden Elemente zur Fixierung aufweist. Kommt dabei die Vorfixierungsvariante mit den "Fingern" zum Einsatz, so ist diese vorzugsweise an beiden Enden mit einem Ring ausgestattet, in welchen die Finger nach Bedarf fest eingekoppelt werden können. Dieser Ring kann allerdings auch fester Bestandteil der Koppeleinheit sein.

Das Interface besteht demnach aus einem Koppelteil und einer Fixierungseinheit, welche auf einen der beiden "passiven" Koppelpartner aufgeschoben und dort fixiert wird. Wie bereits zuvor beschrieben, kann die Versorgung der tauschbaren Fixierungseinheit über entsprechende Kontakte entlang der Fixierungsstelle (bspw. Nut) geschehen. Die beiden Komponenten sind trennbar, somit ist es möglich, die Rolle eines Koppelteils, also aktiv oder passiv, direkt vor oder während der Mission festzulegen und zu wechseln. Auf diese Art und Weise ist es ferner möglich, die Rolle eines Koppelpartners zu übergeben oder zu tauschen. Dies bedeutet, dass beim Abkopplungsprozess die Fixierung der Fixierungseinheit am aktuellen, aktiven Koppelpartner gelöst, die Fixierung am aktuellen passiven Koppelpartner jedoch bestehen bleibt. Somit wird der ehemalige passive Koppelpartner zum aktiven Partner und umgekehrt. Bei der Verwendung von "Fingern" als Fixierungselemente ist es vorgesehen, dass nicht alle, sondern die Zahl der "Finger" nur teilweise übergeben wird. Somit ist es möglich, mehrere aktive Koppelpartner zu erzeugen. Der Prozess sieht dabei vor, dass die Vorgabe über die Verteilung der Rollen der beiden Koppelpartner über die Missionskontrolle oder über teilweise oder vollautonome Systementscheidung des Trägersystems und nach dem Aushandeln zwischen den beiden Koppelpartnern entschieden wird.

Die offenbarte Struktur vereinheitlicht auf diese Weise die wesentlichen Komponenten und ermöglicht es daher, einen Standard zu schaffen und die Komponenten günstig herstellen zu können. Darüber hinaus ist diese Struktur mit den bereits zuvor beschriebenen Prozessen und Komponenten konform.

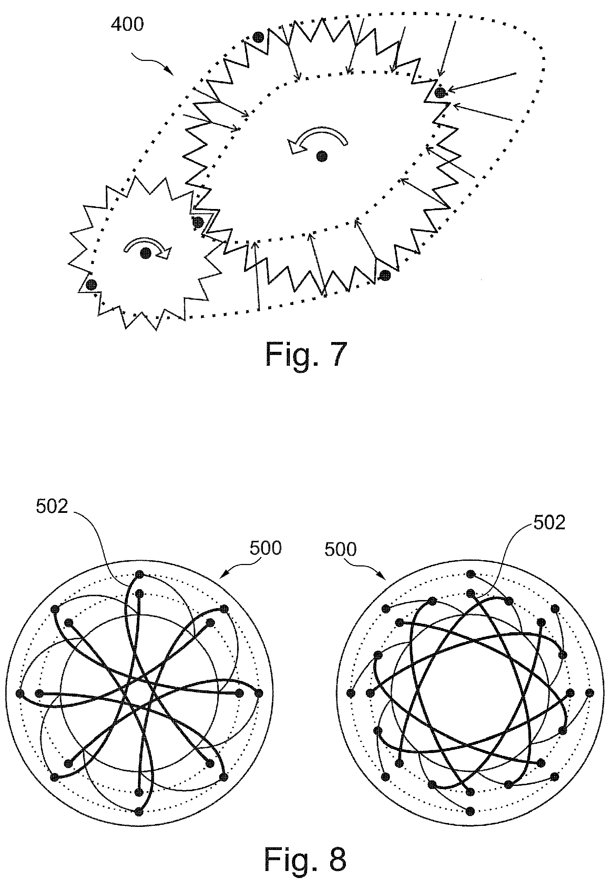

Fig. 7 zeigt einen Hypotrochoid-Machanismus 400 als Ausführungsvariante der Einschnürung über Epi- oder Hypotrochoidmechanik, also miteinander gekoppelte Zahnräder, wobei einige dieser Zahnräder zu einem Bezugspunkt fest sind und andere beweglich zu diesem Zahnrad gekoppelt sind. Punkte in der Zahnradebene, welche auf den Zahnrädern fixiert sind, folgen dann den Formeln

$$y = a \times \cos(wt) + b \times \cos(mwt)$$

$$x = a \times \sin(wt) + b \times \sin(mwt)$$

mit m aus Z. Die Komplexität und Form der beschriebenen Bahn ist durch die Parameter a, b, m, w und t bestimmt. Mit solchen Mechaniken lassen sich Bahnen beschreiben, welche tangentiale Einschnürungen erlauben. Die Anordnung weist in einer weiteren Untervariante Elemente zur Vorfixierung oder zur Endverriegelung auf, welche Epi- oder Hypotrochoidmechaniken zu diesem Zweck einsetzen. Dabei ist die dazu erforderliche Zahnrad-, Riemen- oder

Kettenanordnung analog zu den anderen, bereits beschriebenen Mechanismen bevorzugt mit einem einzelnen Antrieb ausgestattet, welcher die Einstellung der Einschnürungsposition ermöglicht. Weiterhin ist die Anordnung mit entsprechenden Sensoren, wie beispielsweise Encodern, Resolvern und Stromsensoren ausgestattet, um die Messung der Schließposition und der Schließkraft zu ermöglichen. Im Übrigen wird ergänzend insbesondere auf Fig. 1-6 und die zugehörige Beschreibung verwiesen.

Fig. 8 zeigt einen Irismechanismus 500 mit Haltespangen, wie 502, in geschlossener und in geöffneter Position. Der Irismechanismus 500 ist durch gegenseitiges Verdrehen eines Innenrings und eines Außenrings betätigbar und dient als Greifmechanismus zum Vorfixieren. Im Übrigen wird ergänzend insbesondere auf Fig. 1-7 und die zugehörige Beschreibung verwiesen.

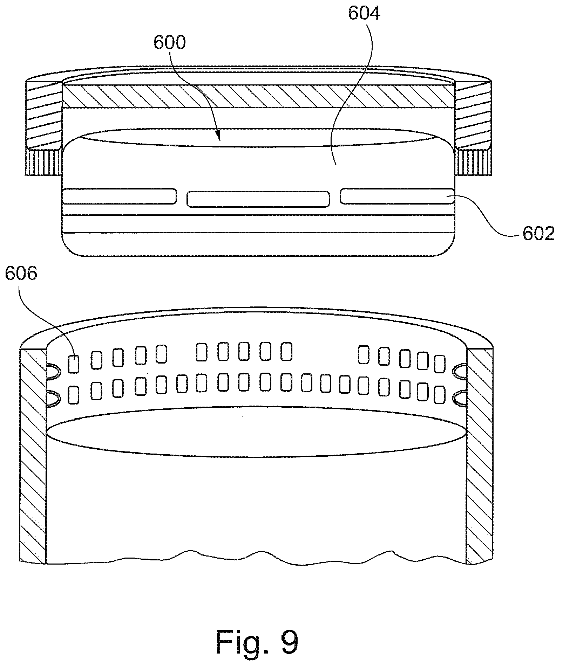

Fig. 9 zeigt ein Steckfeld 600 mit radialen Kontaktelementen, wie 602. Die Kontaktelemente 602 sind außen am Steckfeld 600 von je einem der beiden Koppelpartner, als leitfähiger Ring 604 angebracht, wobei die Gegenseite entsprechend federgelagerte Kontakte, wie 606, auf einer geeigneten Innenkontur aufweist. Die federgelagerten Gegenkontakte 606 können dabei vollständig umlaufend oder je nach Segmentierung des Rings 604 beim ersten Koppelpartner, unterteilt sein. Die Federung selbst kommt bevorzugt aus dem Kontakt 606 selbst. Dieser kann beispielsweise eine einfache Spange sein. Im Übrigen wird ergänzend insbesondere auf Fig. 1-8 und die zugehörige Beschreibung verwiesen.

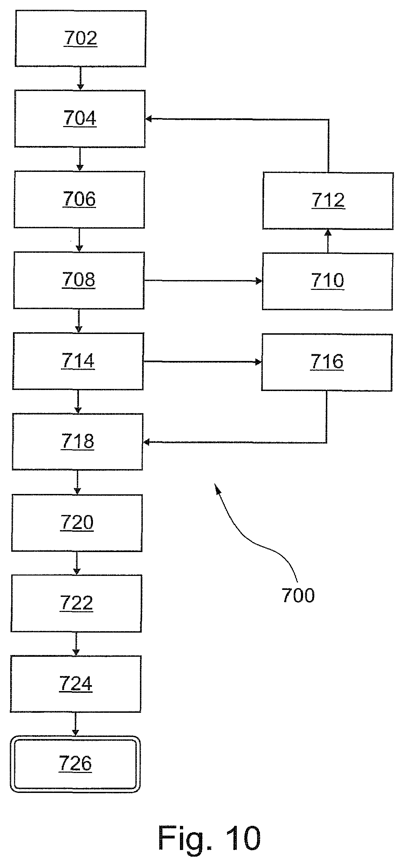

Fig. 10 zeigt einen Prozessablauf 700 bei einem automatisierten Verbinden einer Steckverbinderanordnung. Zunächst wird in Schritt 702 eine in der Anordnung bevorzugt vorhandene Schutziris, welche bevorzugt gleichzeitig als mechanisches Element zur Vorfixierung dient, geöffnet. Wird die Schutziris nur als Schutz gegen Fremdkörper am Steckereinsatz eingesetzt, so sind dennoch weitere Fixierungselemente vorhanden, die in diesem Schritt 702 geöffnet werden. In diesem Moment beträgt der Abstand zwischen den Koppelpartnern bspw. weniger als einen halben Meter. Der Koppelpartner mit dem aktiven Interfaceteil nimmt als nächstes in Schritt 704 eine grobe Vororientierung vor, welche aber im Rahmen der gegebenen Toleranz nur geringfügig ausfallen muss. Hierbei werden insbesondere die Ebene des Vorfixierungsrings und dessen Zentrum vor das passive Koppelteil des Koppelpartners gebracht. Der aktive Koppelpartner kann über Sensoren die Erfolgswahrscheinlichkeit für die Vorfixierung vorausberechnen. Das Vorhandensein mehrerer Sensoren ermöglicht Redundanz. Bei einem Ausfall aller Sensoren ist eine Vorfixierung immer noch "blind" möglich.

Sobald sichergestellt ist, dass die Vorfixierung des passiven Partners mit großer Wahrscheinlichkeit Erfolg haben wird, wird der Vorfixierungsring so über den Koppelteil des passiven Koppelpartners gefahren, dass dieser in Schritt 706 in die sogenannte Fangzone eintritt. Anhand der gleichen Sensoren kann festgestellt werden, dass sich der Koppelpartner in der Fangzone befindet. Durch Zufahren der Vorfixierung, bspw. mit Hilfe der Iris oder anderer Fixierungselemente (Backen, etc.), werden in Schritt 708 die beiden Koppelpartner zunächst rein physikalisch miteinander verbunden. Durch die Vorfixierung ist ein Ausgleich von Versatz und axialer Phasenablage möglich, außerdem bleibt das nun vorfixierte System beim gegenseitigen Aufbringen von Kräften (bspw. Steckkräfte federgelagerter Steckerpins) stabil. Durch die Vorfixierung werden zunächst intrinsisch Fehler im Versatz und der Achsenfluchtung ausgeglichen, darüber hinaus kann das System je nach Ausführung durch aktive Bewegung der Ringhalterungen weitere Fehler ausgleichen.

Überschreitet die gegebene, axiale Phasenablage in diesem Zustand dann immer noch die maximale Toleranzschwelle für die Phasenablage, dann ist es in Schritten 710, 712 möglich, die Vorfixierung wieder teilweise oder ganz zu lösen und durch Drehung des aktiven Koppelpartners die axiale Phasenablage zu korrigieren. Auch ist es möglich, zunächst die gesamte Kombination aus beiden Partnern mit vorhandenen Mitteln zu rotieren und danach erst die entsprechende Korrektur durch Öffnen der Vorfixierung, Rotation und erneutes Schließen der Vorfixierung vorzunehmen.

Liegt die Phasenablage dann im Bereich der Toleranz, wird der passive Koppelpartner, welcher über die Vorfixierung angebunden ist, in Schritt 718 über die Ringhalterungen aktiv an den aktiven Koppelpartner herangezogen. In einer bevorzugten Ausführungsform weisen beide Koppelpartner ein mechanisches Formschlusselement auf, dass eine große Toleranz ermöglicht (bspw. "Dreispitz"). Beim Zusammenfahren fahren diese Formelemente ineinander, was zu einer automatischen Drehung des Steckerelements am passiven Koppelpartner führt (oder des aktiven Koppelpartners, je nach Ausführung). Das Steckerelement ist drehbar, mit Spannfedern ausgeführt, um im nicht gesteckten Zustand einen definierten, Winkel einzunehmen.

Vor dem vollständigen Heranziehen und letztendlich Zusammenstecken der beiden Koppelpartner wird zunächst in Schritt 714 geprüft, ob die Kontakte der beiden Systeme sauber sind. Beispielsweise kann es bei planetaren Weltraumanwendungen zu Verunreinigungen mit Staub kommen. Im Falle von Verunreinigungen kann das Steckfeld, bspw. durch Ausblasen (oder Spülen in wässrigen Umgebungen) oder andere Reinigungseinrichtungen in Schritt 716 gesäubert werden. Da die beiden Koppelpartner über die Vorfixierung miteinander verbunden sind, hat dieser Vorgang (durch gegenseitigen Kräfteeintrag) keine negativen Auswirkungen, wie bspw. Abdrift des passiven Koppelpartners. Eine gesondert vorhandene Schutzvorrichtung (Iris, Blende oder ähnliches) auf den Steckfeldern beider Koppelpartner ist spätestens jetzt geöffnet.

Im weiteren Verlauf werden nun die beiden Koppelpartner durch weiteres Zusammenziehen der Ringhalterung in Schritt 724 in die gesteckte Endstellung gebracht, in der Kontakte zur Signal-, Energie- und/oder Stoffübertragung hergestellt sind. Federvorgespannte Kontakte und elastische Ausgleichselemente werden nun belastet. Um die Kraft von den Ringhalterungen zu nehmen, werden die beiden Koppelpartner mit einem einfachen Riegelmechanismus, bspw. einem einfachen (bspw. konischen) Bolzen, einer zweiten Iris oder mechanische beweglichen Backen in Schritt 720 fixiert.

Die Kontakte können nachfolgend aktiviert werden und das System kann in Schritt 726 den Betrieb aufnehmen. Auch ist es nun möglich, die Vorfixierung und die Ringhalterungen zu öffnen und zu entlasten. Bei erfolgreichem Abschluss des Steckvorgangs, welcher über entsprechende Messungen über die Kontakte bestätigt wird, folgt in Schritt 722 die Messung der axialen Verdrehung gegenüber der Ausgangslage bzw. der axiale Phasenversatz der beiden Koppelpartner. Die geschieht mit Hilfe eines im passiven Koppelpartner untergebrachten Encoders oder Resolvers am drehbaren Teil des Steckereinsatzes. Die aus der Messung gewonnene Information wird an andere Rechner- und Robotermodule zur Korrektur der Lage und zur Korrekten Durchführung von Koordinaten- und Lageberechnungen verteilt und kann zur Sicherstellung des Betriebs periodisch Nachgemessen werden. Auf diese Weise ist sichergestellt, dass ein Verdrehen der beiden Koppelpartner trotz Verriegelung detektiert wird. Im Übrigen wird ergänzend insbesondere auf Fig. 1-9 und die zugehörige Beschreibung verwiesen.

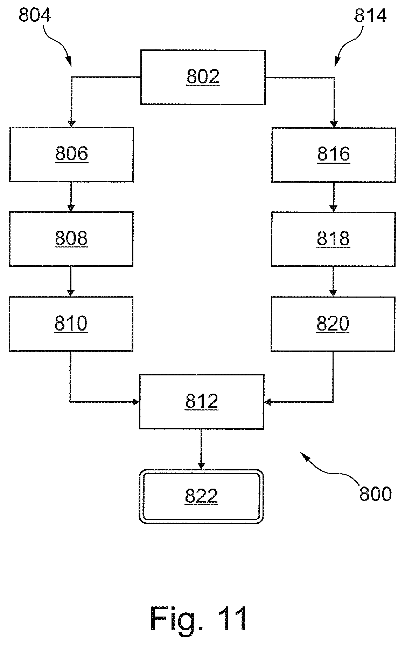

Fig. 11 zeigt einen Prozessablauf 800 bei einem automatisierten Lösen einer Steckverbinderanordnung. Beim Abdockvorgang ergeben sich aufgrund der offenbarten Systemeigenschaften erneut bevorzugte, neuartige Möglichkeiten. Allen Varianten ist gemein, dass zunächst der Betrieb in Schritt 802 über das Interface heruntergefahren wird und beide Komponenten in einen sicheren Zustand gebracht werden (im regulären Betrieb).

Ist es aus Sicherheitsgründen bzw. in der geplanten Mission erforderlich, möglichst rasch eine große Distanz zwischen den beiden Koppelpartnern zu gewinnen (vgl. Notfalltrennung), so sieht eine Variante 804 des Abdockvorgangs es vor, den Koppelpartner "wegzuschießen". Der erforderliche Impuls kommt dabei aus den Federn, welche die Steckerelemente vorspannen. In diesem Fall wird zunächst in Schritt 806 die Vorfixierung gelöst, damit liegt die vollständige Fixierung der Koppelpartner auf dem Verriegelungsmechanismus. Wird dieser nun in Schritt 808 auch gelöst dann entspannen sich die Federn der Steckerelemente schlagartig und beide Koppelpartner trennen sich in Schritt 812 rasch. Das gleiche Verfahren lässt sich auch über die Lösung des Verriegelungsmechanismus gefolgt von der Lösung der Vorfixierung erzielen. Gegebenenfalls erfolgt in Schritt 810 ein Ausfahren der Fangzone.

Soll der Koppelpartner mehr oder weniger kraftlos abgesetzt werden, so wird in einer Variante 814 in Schritt 816 zunächst der Verriegelungsmechanismus geöffnet. Durch die aktive Distanzierung des Koppelpartners mit Hilfe der Ringhalterungen in Schritt 818 werden die Spannfedern der Steckerelemente langsam, vollständig entspannt, bis eine maximale Distanz zwischen beiden Koppelpartnern erreicht ist. Nach dem Öffnen des Vorfixierungsrings in Schritt 820 kann der Ring zurückgezogen werden, so dass der passive Koppelpartner aus der Fangzone tritt. Beide Partner sind nun vollständig getrennt.

Es ist bevorzugt, Maßnahmen zum Schutz des Steckers zu unternehmen und diesen bspw. mit Hilfe einer Iris, welche Bestandteil des Fixierungsrings sein kann, abzuschließen.

Da grundsätzlich beide Partner bevorzugt über Schutzfunktionen verfügen, ist es sinnvoll, auch den passiven Koppelpartner mit einer Iris auszustatten, welche sich ebenso nach Abschluss des Abdockvorgangs in Schritt 822 schließt.

Es ist weiterhin bevorzugt, ein spezielles passives Koppelelement zu verwenden, welches die Kopplung von zwei aktiven Koppelelementen ermöglicht. Der Prozess erweitert sich dann dahingehend, dass einer der beiden aktiven Koppelpartner zunächst das passive Koppelstück aufnimmt und damit als "quasi-passiver" Koppelpartner fungiert. Der zweite, aktive Koppelpartner übernimmt die klassische Rolle nach dem beschriebenen Verfahren.

Im Falle der Ausführungsform ohne Fixierungsring ist es dennoch möglich, dass die Kontakte mit einer Iris bei beiden Koppelpartnern geschützt sind, jedoch übernehmen die einzelnen Fixierungsglieder (Finger) die Vorfixierung sowie den Ausgleich des Versatzes. Der Prozess läuft dann analog für das Andocken und das Abdocken ab. Im Übrigen wird ergänzend insbesondere auf Fig. 1-10 und die zugehörige Beschreibung verwiesen.

Bezugszeichen

| | |
|---|---|
| 100 | Steckverbinderanordnung |
| 102 | erstes Steckverbindermodul |
| 104 | zweites Steckverbindermodul |
| 106 | Greifarm/Finger |
| 108 | Stützstruktur |
| 110 | Gelenk |
| 112 | Kontaktelement/Koppelstück |
| 114 | Koppelteil |
| 116 | Nut |
| 118 | Steckfeld/Steckereinsatz/Steckermodul |
| 120 | Steckfeld/Steckereinsatz/Steckermodul |
| 122 | Iris |
| 124 | Iris |
| 126 | Sensoren/Detektions- und Distanzmesseinrichtung |
| 128 | Kontur |
| 130 | Kontur |
| 132 | Steckerelement |
| 134 | Feder |
| 136 | Spulenpaket |
| 138 | Spulenpaket |
| 140 | Elastomerschicht |
| 142 | Sendeeinrichtung |
| 144 | Kontur/Schiene |
| 146 | Vorspannfeder |
| 148 | Kontaktfläche |
| 200 | erstes Steckverbindermodul |
| 202 | Greifarm |
| 204 | Basisabschnitt |
| 206 | Trägerstruktur |
| 208 | Gelenk |
| 210 | Greifabschnitt |
| 212 | zweites Steckverbindermodul |
| 214 | Nut |
| 216 | Ausnehmung |
| 300 | erstes Steckverbindermodul |
| 302 | Stützstruktur |
| 304 | Backe |
| 306 | zweites Steckverbindermodul |
| 400 | Hypotrochoid-Machanismus |
| 500 | Irismechanismus |
| 502 | Haltespange |
| 600 | Steckfeld |
| 602 | Kontaktelement |
| 604 | Ring |
| 606 | Kontakt |
| 700 | Prozessablauf |
| 702 | Schritt |
| 704 | Schritt |
| 706 | Schritt |
| 708 | Schritt |
| 710 | Schritt |
| 712 | Schritt |
| 714 | Schritt |
| 716 | Schritt |
| 718 | Schritt |
| 720 | Schritt |
| 722 | Schritt |
| 724 | Schritt |
| 726 | Schritt |
| 800 | Prozessablauf |
| 802 | Variante |
| 804 | Schritt |
| 806 | Schritt |
| 808 | Schritt |
| 810 | Schritt |
| 812 | Schritt |
| 814 | Variante |
| 816 | Schritt |
| 818 | Schritt |
| 820 | Schritt |
| 822 | Schritt |

**Patentansprüche**

1. Steckverbinderanordnung (100) mit einem ersten Steckverbindermodul (102, 200, 300) und einem zweiten Steckverbindermodul (104, 212, 306), wobei das zweite Steckverbindermodul (104, 212, 306) wenigstens einen Koppelabschnitt (114) mit einer Greifgegenkontur (116, 214) und einen Steckverbinderabschnitt (120) zur Signal-, Energie- und/oder Stoffübertragung aufweist, **dadurch gekennzeichnet, dass** der wenigstens eine Koppelabschnitt (114) und der Steckverbinderabschnitt (120) des zweiten Steckverbindermoduls (104, 212, 306) relativ zueinander drehbar sind.

2. Steckverbinderanordnung (100) nach Anspruch 1, **dadurch gekennzeichnet, dass** das erste Steckverbindermodul (102, 200, 300) eine bewegbare Greifeinrichtung aufweist.

3. Steckverbinderanordnung (100) nach Anspruch 2, **dadurch gekennzeichnet, dass** die Greifeinrichtung wenigstens einen Sensor (126) aufweist.

4. Steckverbinderanordnung (100) nach wenigstens einem der Ansprüche 2-3, **dadurch gekennzeichnet, dass** die Greifeinrichtung mehrere Greifarme (106, 202) mit Gelenken (110, 208) und eine Antriebseinrichtung zum Bewegen der Greifarme (106, 202) aufweist.

**5.** Steckverbinderanordnung (100) nach wenigstens einem der Ansprüche 2-3, **dadurch gekennzeichnet, dass** die Greifeinrichtung einen in sich starren Gerüstabschnitt (108, 302), an dem Gerüstabschnitt (108, 302) verlagerbar angeordnete Greifelemente (304) und eine Antriebseinrichtung zum Verlagern der Greifelemente (304) aufweist.

**6.** Steckverbinderanordnung nach wenigstens einem der Ansprüche 2-3, **dadurch gekennzeichnet, dass** die Greifeinrichtung einen in sich starren Gerüstabschnitt, an dem Gerüstabschnitt angeordnete größenveränderbare Kissenelemente und eine Betätigungseinrichtung zur Größenveränderung der Kissenelemente aufweist.

**7.** Steckverbinderanordnung (100) nach wenigstens einem der vorhergehenden Ansprüche, **dadurch gekennzeichnet, dass** das erste Steckverbindermodul (102, 200, 300) einen Steckverbinderabschnitt (118) zur Signal-, Energie- und/oder Stoffübertragung aufweist.

**8.** Steckverbinderanordnung (100) nach wenigstens einem der vorhergehenden Ansprüche, **dadurch gekennzeichnet, dass** der wenigstens eine Koppelabschnitt (114) wenigstens eine Sendeeinrichtung (142) aufweist.

**9.** Steckverbinderanordnung (100) nach wenigstens einem der vorhergehenden Ansprüche, **dadurch gekennzeichnet, dass** der wenigstens eine Koppelabschnitt (114) wenigstens einen elektrischen Kontaktabschnitt aufweist.

**10.** Verfahren zum automatisierten Verbinden einer Steckverbinderanordnung nach wenigstens einem der vorhergehenden Ansprüche (100), **dadurch gekennzeichnet, dass** das Verfahren folgende Schritte aufweist: Einfangen (706); Vorverbinden (708); Heranziehen (718); Endverbinden; Verriegeln (720).

**11.** Verfahren nach Anspruch 10, **dadurch gekennzeichnet, dass** zum Einfangen (706) das erste Steckverbindermodul (102, 200, 300) und das zweite Steckverbindermodul (104, 212, 306) zueinander axial und/oder radial vororientiert (704) und einander bis in eine Fangzone angenähert werden.

**12.** Verfahren nach wenigstens einem der Ansprüche 10-11, **dadurch gekennzeichnet, dass** zum Vorverbinden (708) das erste Steckverbindermodul (102, 200, 300) und das zweite Steckverbindermodul (104, 212, 306) miteinander lediglich mechanisch verbunden werden.

**13.** Verfahren nach wenigstens einem der Ansprüche 10-12, **dadurch gekennzeichnet, dass** zum Heranziehen (718) das erste Steckverbindermodul (102, 200, 300) und das zweite Steckverbindermodul (104, 212, 306) unter Verwendung einer beim Vorverbinden (708) hergestellten Vorverbindung zueinander gezogen werden.

**14.** Verfahren nach wenigstens einem der Ansprüche 10-13, **dadurch gekennzeichnet, dass** zum Endverbinden das erste Steckverbindermodul (102, 200, 300) und das zweite Steckverbindermodul (104, 212, 306) unter Verwendung einer beim Vorverbinden hergestellten Vorverbindung miteinander mechanisch sowie zur Signal-, Energie- und/oder Stoffübertragung endverbunden werden.

**15.** Verfahren zum automatisierten Lösen einer Steckverbinderanordnung (100) nach wenigstens einem der Ansprüche 1-9, **dadurch gekennzeichnet, dass** das erste Steckverbindermodul (102, 200, 300) und das zweite Steckverbindermodul (104, 212, 306) zunächst miteinander mithilfe einer Vorverbindung und einer verriegelten Endverbindung zur Signal-, Energie- und/oder Stoffübertragung verbunden sind und das Verfahren folgende Schritte aufweist: Beenden einer Signal-, Energie- und/oder Stoffübertragung zwischen dem ersten Steckverbindermodul (102, 200, 300) und dem zweiten Steckverbindermodul (104, 212, 306); Trennen des ersten Steckverbindermoduls (102, 200, 300) und des zweiten Steckverbindermoduls (104, 212, 306) voneinander.

Fig. 1

Fig. 2

Fig. 3

200 202 212

a)

200 212

b)

200 202

c)

200 212

d)

200 212

e)

200 212

f)

Fig. 4

Fig. 5

Fig. 6

Fig. 7

Fig. 8

Fig. 9

Fig. 10

Fig. 11

**Europäisches Patentamt**

**European Patent Office**

**Office européen des brevets**

## EUROPÄISCHER RECHERCHENBERICHT

Nummer der Anmeldung

EP 16 16 6095

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 802 861 A (GASTON LYNN S [US]) 7. Februar 1989 (1989-02-07) * Spalte 2, Zeile 44 - Spalte 3, Zeile 36 * * Abbildungen * ----- | 1,7-15 | INV. B25J15/04 B25J15/10 H01R13/631 |
| X | US 5 069 524 A (WATANABE SHINPEI [JP] ET AL) 3. Dezember 1991 (1991-12-03) * Spalte 5, Zeile 20 - Spalte 6, Zeile 7 * * Abbildungen 1-3 * ----- | 1,7-9,15 | |
| A | US 2014/046486 A1 (ARAI T; MIMURA T) 13. Februar 2014 (2014-02-13) * Absätze [0063], [0068] - [0070], [0073], [0084], [0090] - [0093] * * Abbildungen 9-13 * ----- | 1-15 | |
| A | DE 10 2011 076926 A1 (SIEMENS AG [DE]) 6. Dezember 2012 (2012-12-06) * Absätze [0019], [0021], [0035] * * Abbildung 4 * ----- | 1,10,15 | RECHERCHIERTE SACHGEBIETE (IPC) B25J H01R |

Der vorliegende Recherchenbericht wurde für alle Patentansprüche erstellt

| Recherchenort | Abschlußdatum der Recherche | Prüfer |
|---|---|---|
| München | 23. September 2016 | Grenier, Alain |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 16 6095

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-09-2016

| Im Recherchenbericht angeführtes Patentdokument | Datum der Veröffentlichung | Mitglied(er) der Patentfamilie | Datum der Veröffentlichung |
|---|---|---|---|
| US 4802861 A | 07-02-1989 | AU 605225 B2<br>BR 8707771 A<br>EP 0328553 A1<br>JP H02501340 A<br>US 4802861 A<br>WO 8810525 A1 | 10-01-1991<br>03-10-1989<br>23-08-1989<br>10-05-1990<br>07-02-1989<br>29-12-1988 |
| US 5069524 A | 03-12-1991 | KEINE | |
| US 2014046486 A1 | 13-02-2014 | EP 2712716 A2<br>JP 2014034075 A<br>US 2014046486 A1 | 02-04-2014<br>24-02-2014<br>13-02-2014 |
| DE 102011076926 A1 | 06-12-2012 | DE 102011076926 A1<br>WO 2012163639 A1 | 06-12-2012<br>06-12-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5320395 A
- WO 9726118 A1
- WO 2009059440 A1
- US 6842666 B2
- US 4929011 A